Europäisches Patentamt

European Patent Office

Office européen des brevets

(19)

(11) **EP 1 223 725 B1**

(12) **EUROPÄISCHE PATENTSCHRIFT**

(45) Veröffentlichungstag und Bekanntmachung des Hinweises auf die Patenterteilung:
**29.06.2005 Patentblatt 2005/26**

(51) Int Cl.7: **H04L 29/12**, H04L 29/06

(21) Anmeldenummer: **01100723.4**

(22) Anmeldetag: **12.01.2001**

(54) **Verfahren und Vorrichtung zur Relevanzprüfung eines Kennzeichners**

Method and device for testing of the relevancy of a signature

Procédé et dispositif pour le test de pertinence de la signature

(84) Benannte Vertragsstaaten:
**AT BE CH CY DE DK ES FI FR GB GR IE IT LI LU MC NL PT SE TR**

(43) Veröffentlichungstag der Anmeldung:
**17.07.2002 Patentblatt 2002/29**

(73) Patentinhaber: **Vector Informatik GmbH**
**70499 Stuttgart (DE)**

(72) Erfinder:
  • **Rein, Jochen**
    **71272 Renningen-Malmsheim (DE)**
  • **Pongs, Tobias**
    **70563 Stuttgart (DE)**
  • **Wettstein, Horst, Prof. Dr.-Ing.**
    **76227 Karlsruhe (DE)**

(74) Vertreter: **Vetter, Hans, Dipl.-Phys. Dr. et al**
**Patentanwälte**
**Magenbauer, Reimold, Vetter & Abel**
**Plochinger Strasse 109**
**73730 Esslingen (DE)**

(56) Entgegenhaltungen:
**EP-B- 0 675 024        WO-A-99/13620**
**DE-A- 4 129 412        US-A- 5 444 643**
**US-B- 5 032 987**

• **LARS-BERNO FREDRIKSSON: "A CAN Kingdom" INTERNET, [Online] Bd. 3.01, März 1997 (1997-03), XP002168443 Gefunden im Internet: <URL:www.can-cia.com> [gefunden am 2001-05-28]**
• **BOB JENKINS: "Hash Funktions" DR. DOBB'S JOURNAL, [CD-ROM] September 1997 (1997-09), XP002168979 Gefunden im Internet: <URL:file:/F%7C/articles/1997/9709/9709n/9 709n.h> [gefunden am 2001-06-07]**
• **NATIONAL SEMICONDUCTOR: "Replacing dedicated protocoll controllers with code efficiant and configurable microcontroller-low speed CAN network applications" [Online] 1997 , INTERNET XP002157760 Gefunden im Internet: <URL: www.national.com> [gefunden am 2001-05-28] * das ganze Dokument ***
• **INFINEON TECHNOLOGIES: "The On-Chip CAN Interface" INTERNET, [Online] September 1999 (1999-09), XP002168444 Gefunden im Internet: <URL:http://www.infineon.com/> [gefunden am 2000-05-29]**
• **EDWIN T.FLOYD: "An Existential Dictionary Superimposed coding packs a lot of information into small place" DR. DOBB'S JOURNAL , [CD-ROM] 1990, XP002168980 Gefunden im Internet: <URL:file:/F%7C/articles/1997/9709/9709n/9 709n.h> [gefunden am 2001-06-07]**

## Beschreibung

Die Erfindung betrifft ein Prüfverfahren zur Relevanzprüfung eines Kennzeichners, der einer Kommunikations-Einrichtung über ein Kommunikationsnetz in einer Nachricht übermittelbar ist, und ein Prüfmodul hierfür sowie ein Generierungsverfahren zur Bildung einer für eine Kommunikations-Einrichtung vorgesehenen Relevanztabelle für eine Relevanzprüfung von einer Kennzeichnergruppe zugeordneten Kennzeichnern, und ein Generierungsmodul hierfür.

In Kommunikationsnetzen werden Nachrichten häufig nicht gezielt von einer Quell-Kommunikations-Einrichtung zu einer Ziel-Kommunikations-Einrichtung übermittelt, sondern in einem sogenannten Broadcast-Verfahren an zahlreiche Ziel-Kommunikations-Einrichtungen versandt. Die jeweiligen Ziel-Kommunikations-Einrichtungen müssen dann anhand eines in einer jeweiligen Nachricht enthaltenen Kennzeichners, z.B. einer ZielAdresse der Nachricht oder eines Kennzeichners für einen Inhalt der Nachricht, ermitteln, ob die Nachricht für sie relevant ist. Typische Beispiele hierfür sind beispielsweise Bussysteme, bei denen die Busteilnehmer alle auf einem Bus übermittelten Nachrichten sozusagen mithören.

Wenn für eine Ziel-Kommunikations-Einrichtung lediglich ein einziger Kennzeichner relevant ist, ist eine Relevanzprüfung des Kennzeichners durch eine einfache Vergleichsoperation noch verhältnismäßig leicht zu bewältigen. Bei mehreren, für die Ziel-Kommunikations-Einrichtung relevanten Kennzeichnern wird die Ermittlung, ob ein jeweils empfangener Kennzeichner für die Kommunikations-Einrichtung relevant ist, bedeutend schwieriger. Beispielsweise kann ein zu prüfender Kennzeichner anhand einer linear zu durchlaufenden Liste von relevanten Kennzeichnern geprüft werden. Bei einer etwas verbesserten Methode wird dann z.B. ein Halbierungsverfahren auf eine solche Liste angewendet. Es ist auch denkbar, dass relevante Kennzeichner im Gegensatz zu nicht relevanten Kennzeichnern durch ein eindeutiges, gemeinsames Merkmal gekennzeichnet sind, z.B. durch ein bestimmtes Bitmuster, so dass eine einfache Vergleichsprüfung beispielsweise durch Ausmaskieren des Bitmusters möglich ist.

Ein solches Ausmaskieren im Rahmen einer sogenannten Akzeptanz-Filterung wird z.B. in der DE 41 29 412 beschrieben. Nachrichten, die bei der Akzeptanz-Filterung nicht ausgesondert werden, werden in einen Zwischenspeicher eingeschrieben. Dabei kann ein Strom empfangener Nachrichten mit Hilfe unterschiedlicher Akzeptanz-Filter auf verschiedene Bereiche des Zwischenspeichers aufgeteilt werden.

Wenn eine Kommunikations-Einrichtung, beispielsweise ein Busteilnehmer eines CAN-Busses (CAN = Controller Area Network), mit zahlreichen unterschiedlichen, für die Kommunikations-Einrichtung jeweils relevanten Kennzeichnern versehene Nachrichten erhält, sind die obengenannten Prüfverfahren jedoch sehr umständlich und zeitaufwändig. Auf Seiten der Kommunikations-Einrichtung muss hierfür beispielsweise erhebliche und teure Prozessorleistung bereitgestellt werden.

Zur Optimierung der Relevanzprüfung von Kennzeichnern wird im Stand der Technik, beispielsweise in der EP 0 675 024 B1 vorgeschlagen, Hash-Tabellen zu verwenden. Bei der in der EP 0 675 024 B1 vorgeschlagenen Hash-Tabelle ist wird anhand einer Hash-Rechenoperation ein Adressplatz in der Hash-Tabelle ermittelt. Wenn an dem Platz der Kennzeichner eingetragen ist, wird die Nachricht, die den Kennzeichner enthalten hat, bearbeitet, ansonsten ignoriert.

Gemäß der US 5,032,987 werden mehrere Hash-Tabellen zu Kennzeichner-Prüfung verwendet. Jeder Hash-Tabelle ist eine eigene Hash-Funktion zugeordnet, so dass ein empfangener Kennzeichner parallel anhand der unterschiedlichen Hash-Funktionen bzw. der unterschieden Hash-Tabellen geprüft werden kann. Die jeweilige Hash-Funktion wird nur ein einziges Mal ausgeführt, so dass ein empfangener Kennzeichner in einer der parallelen Hash-Tabellen in einem Arbeitsschritt gefunden werden kann oder nicht.

Auch in der WO 99/13620 wird die parallele Verarbeitung eines Kennzeichners vorgeschlagen, wobei jeweils einer Hash-Tabelle eine Hash-Funktion zugeordnet ist und in einem einzigen Hash-Suchschritt ein Index in der Tabelle ermittelt wird.

In der Beschreibungseinleitung der WO 99/13620 wird auf Stand der Technik hingewiesen, in dem beschrieben ist, dass zur Auflösung von Kollisionen Ketten oder Listen gebildet werden. Die Abarbeitung solcher Ketten erfordert jedoch wiederholte Speicherzugriffe und senkt die Leistungsfähigkeit.

Es ist daher Aufgabe der Erfindung, Verfahren und Vorrichtungen zu schaffen, die eine effiziente, Ressourcen schonende Hash-Relevanzprüfung von Kennzeichnern ermöglichen, die einer Kommunikations-Einrichtung über ein Kommunikationsnetz in einer Nachricht übermittelbar sind.

Zur Lösung der Aufgabe sind ein Prüfverfahren und ein Prüfmodul zur Relevanzprüfung eines Kennzeichners gemäß unabhängiger Ansprüche vorgesehen.

Das Prüfverfahren sowie das Prüfmodul dienen im Wesentlichen dazu, dass eine Kommunikations-Einrichtung, die einen Kennzeichner im Rahmen einer Nachricht empfängt, eine schnelle Relevanzprüfung des jeweiligen Kennzeichners durchführen kann.

Zur Bildung einer dazu erforderlichen Relevanztabelle und somit zur Lösung der Aufgabe sind ferner vorgesehen: ein Generierungsverfahren sowie ein Generierungsmodul gemäß der technischen Lehre weiterer unabhängiger Ansprüche.

Bei der Generierung der Relevanztabelle werden somit sinngemäß dieselben Verfahrensschritte durchgeführt wie bei der Prüfung eines Kennzeichners anhand der derart generierten Relevanztabelle, insbesondere werden dieselbe Rechenregel und dieselbe Fortschaltregel angewendet, so dass ein gemeinsamer erfinderischer Grundgedanke vorliegt. Der einzige Unterschied liegt im Grunde nur noch darin, das bei der Generierung der Relevanztabelle ein Kennzeichner an einen ihm jeweils zugeordneten Platz eingetragen wird und bei der Relevanzprüfung geprüft wird, ob ein zu prüfender Kennzeichner gegebenenfalls an diesem Platz eingetragen ist.

Ein wesentlicher Grundgedanke der Erfindung ist die Anwendung des an sich bekannten, sogenannten Hash-Verfahrens zu einer optimierten Relevanzprüfung von Kennzeichnern, mit denen für eine Kommunikations-Einrichtung relevante Nachrichten markiert sind. Im Gegensatz zu den bekannten Verfahren bricht das erfindungsgemäße Verfahren auf schnelle und effiziente Weise eine Relevanzprüfung nach einer Maximalzahl von Arbeitsschritten ab, wobei jede Anwendung der Rechenregel und der Fortschaltregel als Arbeitsschritt zählt. Es ist somit möglich, dass auch umfangreiche Kennzeichnergruppen von für eine Kommunikations-Einrichtung relevanten Kennzeichnern in relativ kurzer Zeit zuverlässig ermittelt und irrelevante Kennzeichner ausgesondert werden können.

Bereits bei der Erstellung der Relevanztabelle wird für die Kennzeichner der für die Kommunikations-Einrichtung relevanten Kennzeichnergruppe eine Maximalzahl von Arbeitsschritten ermittelt und beispielsweise für die Kommunikations-Einrichtung und/oder das Prüfmodul bereitgestellt, die bei Anwendung der Rechenregel und/oder der Fortschaltregel auf die Kennzeichner der Kennzeichnergruppe maximal erforderlich ist, so die Maximalzahl als ein Abbruchkriterium bei einer Relevanzprüfung eines nicht in der Kennzeichnergruppe enthaltenen Kennzeichners genutzt werden kann.

Bei der Relevanzprüfung ist vorgesehen, dass die Rechenregel und/oder die Fortschaltregel für den zu prüfenden Kennzeichner für eine vorbestimmte Maximalzahl von Arbeitsschritten angewendet werden und dass die Kennung als irrelevant eingestuft wird, wenn der nach der vorbestimmten Maximalzahl von Arbeitsschritten jeweils ermittelte Platz in der Relevanztabelle einem anderen Kennzeichner als dem zu prüfenden Kennzeichner zugeordnet ist.

Zur weiteren Optimierung der Relevanzprüfung sind die in den abhängigen Ansprüchen sowie in der Beschreibung angegebenen Maßnahmen vorgesehen.

Durch eine optimierte Gestaltung der Relevanztabelle lässt sich die Effizienz bei der Relevanzprüfung erheblich steigern, insbesondere kann die Anzahl der erforderlichen Prüfschritte, also die Anwendung der Rechenregel und/oder der Fortschaltregel, beispielsweise bei einzelnen oder durchschnittlich bei allen Kennzeichnern der Kennzeichnergruppe verringert werden.

Daher ist bei dem Generierungsverfahren vorgesehen, dass zumindest einem Kennzeichner der Kennzeichnergruppe ein Platz in der Relevanztabelle derart optimiert zugeordnet wird, dass die Anzahl der zum Auffinden des Platzes erforderlichen Arbeitsschritte gering ist, bei denen insbesondere die Rechenregel und/oder die Fortschaltregel angewendet wird.

Der mindestens eine, optimiert in der Relevanztabelle platzierte Kennzeichner wird vorteilhaft nach einem vorbestimmten Kriterium ausgewählt, insbesondere nach einer erwarteten Übertragungshäufigkeit oder nach einer Priorität der ihn jeweils enthaltenden Nachricht. Es ist auch möglich, dass ein einzelner Kennzeichner, z.B. ein besonders häufig in Nachrichten enthaltener Kennzeichner, nach einem ersten Kriterium ausgewählt wird und eine Anzahl anderer Kennzeichner, z.B. besonders wichtige, beispielsweise zu priorisierende Kennzeichner, nach einem zweiten Kriterium ausgewählt werden.

Eine zweckmäßige Optimierungsmethode bei dem erfindungsgemäßen Generierungsverfahren besteht darin, dass die Anzahl der den Kennzeichnern der Kennzeichnergruppe in der Relevanztabelle zuordenbaren Plätze vergrößert oder verkleinert wird. Somit kann insbesondere die durchschnittlich für jeden der Kennzeichner der Kennzeichnergruppe erforderliche Anzahl von Prüfschritten vermindert werden.

Allerdings ist es bei der Optimierung der Relevanztabelle ein wesentliches Ziel, diese zur Verringerung des Speicherplatzbedarfes in der Kommunikations-Einrichtung möglichst klein zu gestalten, so dass möglichst viele Relevanztabellen-Plätze einem Kennzeichner einer Kennzeichnergruppe zugeordnet sind.

Dazu wird das Generierungsverfahren vorteilhafterweise dadurch verbessert, dass die Kennzeichner der Kennzeichnergruppe im Rahmen der Anwendung der Rechenregel auf eine Abbildungsmenge transformiert werden, anhand derer den jeweiligen Kennzeichnern Plätze in der Relevanztabelle zuordenbar sind.

Die Abbildungsmenge wird dabei zweckmäßigerweise derart gebildet, dass die den jeweiligen Kennzeichnern zugeordneten Plätze gleichmäßig und unter Vermeidung von Kollisionsfällen in der Relevanztabelle angeordnet sind. Die Rechenregel wird demnach so gewählt und/oder modifiziert, dass eine Clusterbildung, bei der mehrere Kennzeichner aufgrund einer unmodifizierten Rechenregel an sich jeweils auf denselben Platz treffen würden, vermieden wird. Aufgrund der modifizierten Rechenregel werden diese Kennzeichner jeweils separaten Plätzen zugewiesen.

Zur Modifizierung der Rechenregel sind mehrere, einzeln oder in beliebiger Kombination durchspielbare Verfahren geeignet. Beispielsweise wird zu jedem Kennzeichner der Kennzeichnergruppe ein insbesondere als Zufallszahl ermittelter Zahlwert addiert oder subtrahiert. Ferner könnte auch jeder Kennzeichner mit einem Multiplikator multipliziert oder durch logische Operationen bearbeitet werden, z.B. logisch "UND", logisch "ODER" oder "Shift".

Es versteht sich, dass eine im Rahmen einer Optimierung der Relevanztabelle jeweils ermittelte, sozusagen "optimale" Rechenregel auch durch das Prüfverfahren und das Prüfmodul angewendet wird.

Eine weitere Optimierungsmethode, die ohne Weiteres auch mit den obigen Optimierungen kombiniert werden kann, besteht darin, dass die Reihenfolge variiert wird, nach der den Kennzeichnern der Kennzeichnergruppe in der Relevanztabelle jeweils Plätze zugeordnet werden. Auf diese Weise muss unter Umständen nicht einmal die Rechenregel modifiziert werden, um eine Anzahl von Kollisionen bei der Zuordnung von Plätzen in der Relevanztabelle zu Kennzeichnern zu verringern. Ferner kann beispielsweise ein sehr häufig zu prüfender Kennzeichner oder ein Kennzeichner mit einer hohen Priorität bevorzugt in die Relevanztabelle eingetragen werden.

Ein besonderer Vorteil der optimierten Relevanztabelle ist darin zu sehen, dass diese sozusagen "offline" durch ein Generierungsmodul erstellt werden kann. Beispielsweise kann hierfür eine leistungsfähige Workstation oder ein Rechnernetzwerk mit einer großen Prozessorleistung vorgesehen werden. Zudem spielt es auch keine wesentliche Rolle, welche Zeit für die Optimierung der Relevanztabelle erforderlich ist. So können die obigen Optimierungsschritte ohne Weiteres in verschiedenen Kombinationen von dem Generierungsmodul durchprobiert werden, um eine optimal kleine Relevanztabelle zu generieren, bei der bei einer Relevanzprüfung eines Kennzeichners nur wenige Arbeitsschritte erforderlich sind.

Die optimierte Relevanztabelle wird dann für das Prüfmodul bereitgestellt, das beispielsweise in einen Empfangsbaustein einer Kommunikations-Einrichtung integriert ist. Beispielsweise kann die Relevanztabelle in ein ROM (Read Only Memory) gebrannt werden. Auf Seiten des Prüfmoduls und somit auf Seiten der Kommunikations-Einrichtung ist dann aufgrund der bereits optimierten Relevanztabelle nur sehr wenig Prozessorleistung zu einer Relevanzprüfung eines Kennzeichners erforderlich.

Die folgenden vorteilhaften Varianten der Erfindung beziehen sich sowohl auf das Prüfverfahren und das Prüfmodul als auch auf das Generierungsverfahren und das Generierungsmodul.

Als Nichtbenutzungskennung können verschiedene Kennungstypen eingesetzt werden. Vorteilhafterweise ist als Nichtbenutzungskennung eine Leerkennung vorgesehen, die durch das Prüfmodul sehr leicht ermittelbar ist. Es ist auch möglich, dass die Nichtbenutzungskennung durch einen einem ungültigen, nicht in der Kennzeichnergruppe enthaltenen Kennzeichner zugeordneten Wert gebildet wird, beispielsweise einem Wert der wesentlich größer ist, als ein für einen gültigen Kennzeichner zugelassener Wert.

Bei der Anwendung der Rechenregel und/oder der Fortschaltregel wird zweckmäßigerweise ein Indikator auf den jeweiligen ersten und/oder den jeweiligen mindestens einen zweiten Platz in der Relevanztabelle ermittelt, indem der Kennzeichner bzw. ein aus diesem anhand der Fortschaltregel gebildeter Fortschaltwert durch eine Primzahl geteilt werden, die der Anzahl von in der Relevanztabelle für Kennzeichner vorgesehenen Plätzen entspricht. Auf diese Weise lässt sich der einem Kennzeichner jeweils gemäß der Rechenregel bzw. der Fortschaltregel zuzuordnende Platz schnell auffinden.

Bei einem besonders bevorzugten Vorgehen ist vorgesehen, dass der Indikator als der ganzzahlige Rest einer Division des Kennungswerts durch die Primzahl ermittelt wird. Statt einer Division durch die Primzahl kann auch eine wiederholte Subtraktion der Primzahl vom jeweiligen Kennzeichner vorgesehen sein.

Durch die Fortschaltregel wird bewirkt, dass zwei Kennzeichner unterschiedlichen Plätzen zugeordnet werden, die aufgrund der Rechenregel ansonsten auf denselben Platz in der Relevanztabelle zuzuweisen sind. Dabei ist vorteilhafterweise vorgesehen, dass die Fortschaltregel die Rechenregel im Wesentlichen enthält. Dazu wird bei der Anwendung der Fortschaltregel z.B. zunächst aus einem Kennzeichner ein Fortschaltwert gebildet, der zu einem aktuellen Index auf einen Platz in der Relevanztabelle addiert wird. Auf Basis dieser Summe wird anschließend anhand der Rechenregel ein Platz für den Kennzeichner in der Relevanztabelle ermittelt. Es versteht sich, dass beim Generierungsverfahren und beim Prüfverfahren dieselbe Fortschaltregel angewendet werden muss.

Bei dem Kennzeichner kann es sich prinzipiell um einen beliebigen, in einer für die Kommunikations-Einrichtung bestimmten Nachricht enthaltenen Wert, Indikator oder dergleichen handeln. Zweckmäßigerweise ist der Kennzeichner in einer Adressangabe, insbesondere in einer Zieladresse, einer jeweiligen Nachricht oder in einem Inhaltskennzeichner für einen Inhalt der jeweiligen Nachricht enthalten. Dabei kann der Kennzeichner die Zieladresse bzw. den Inhaltskennzeichner bilden oder nur ein Teil von dieser bzw. diesem sein. Ein jeweils zu prüfender, einen Kennzeichner bildender Anteil einer Zieladresse oder eines Inhaltskennzeichners kann beispielsweise durch Ausmaskieren oder Shiften der jeweiligen Zieladresse bzw. des Inhaltskennzeichners ermittelt werden.

Prinzipiell kann ein beliebiges Kommunikationsnetz vorgesehen sein, sogar ein solches, bei dem eine End-zu-End-Kommunikation vorgesehen ist. Auch bei einem solchen Kommunikationsnetz werden möglicherweise einer Kommunikations-Einrichtung mehrere Nachrichten zugesandt, die einer Relevanzprüfung zu unterziehen sind und in denen hierfür geeignete Kennzeichner vorgesehen sind. Beispielsweise könnte eine Nachricht in einem vorbestimmten Betriebszustand der Kommunikations-Einrichtung relevant sein, in einem anderen Betriebszustand nicht. Allerdings ist in einer bevorzugten Variante der Erfindung vorgesehen, dass als Kommunikationsnetz ein Broadcast-Netzwerk vorgesehen ist, bei dem die die jeweiligen Nachrichten empfangenden Kommunikations-Einrichtungen zu einer Relevanzprüfung der Nachrichten, also zu einem Ausfiltern von für sie jeweils irrelevanten Nachrichten gezwungen sind.

Typische Beispiele von Broadcast-Netzwerken sind Bussysteme. Daher ist in einer vorteilhaften Variante ein Bus-System, insbesondere ein CAN- oder LIN-Bussystem (CAN = Controller Area Network, LIN = Local Interconnect network), als Kommunikationsnetz vorgesehen. CAN- oder LIN-Bussysteme sind insbesondere in der Automatisierungstechnik oder bei Kraftfahrzeugen üblich. Besonders bei Kraftfahrzeugen verursacht die zunehmende Anzahl elektrischer Komponenten, die jeweils zu steuern und zu überwachen sind, eine steigende Nachrichtenbelastung der jeweiligen Bussysteme. Die Busteilnehmer empfangen dabei eine große Zahl von für sie irrelevanten Nachrichten, die durch eine erfindungsgemäße Relevanzprüfung schnell und mit geringer Rechenleistung aussonderbar sind. Beispielsweise sind für eine Steuerungskomponente für eine Heckbeleuchtung solche Nachrichten unwichtig, die z.B. das Autoradio oder ein Navigationssystem betreffen.

Im Folgenden werden die Erfindung und ihre Vorteile anhand eines Ausführungsbeispiels erläutert. Es zeigen:

Figur 1          schematisch einen Bus 10 mit Kommunikations-Einrichtungen 11, 12, 13, die Prüfmodule 14, 15, 16 enthalten, sowie ein Entwicklungswerkzeug 17 mit einem Generierungsmodul 20,

Figur 2          eine auf dem Bus 10 versendete Nachricht 19,

Figur 3          ein Ablaufdiagramm 23 des Generierungsmoduls 20 aus Figur 1,

Figur 4          ein Ablaufdiagramm der Prüfmodule 14, 15, 16 aus Figur 1, und die

Figuren 5 bis 8          durch das Generierungsmodul 20 aus Figur 3 erzeugte Relevanztabellen 22, 22b, 22c, 22d.

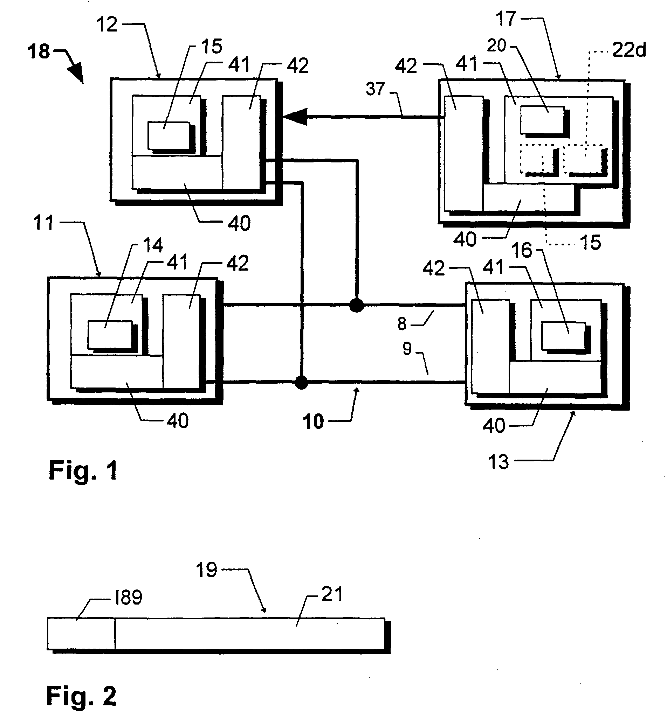

Figur 1 zeigt einen ein Kommunikationsnetz bildenden Bus 10, der vorliegend ein CAN-Bus oder LIN-Bus ist, mit an diesen angeschlossenen Kommunikations-Einrichtungen 11, 12 und 13, die Bus-Teilnehmer des Busses 10 bilden und exemplarisch für weitere, nicht dargestellte Kommunikations-Einrichtungen stehen. Der Bus 10 ist an einem Kraftfahrzeug 18 angeordnet und weist Busleitungen 8, 9 auf, wobei eine Busleitung 8, 9 beispielsweise durch eine für die Kommunikations-Einrichtungen 11, 12 und 13 gemeinsame Masse gebildet werden kann.

Bei der Kommunikations-Einrichtung 11 handelt es sich beispielsweise um ein zentrales Steuergerät zur Steuerung von lokalen Baugruppensteuerungen, die z.B. durch die Kommunikations-Einrichtungen 12, 13 gebildet werden und beispielsweise zur Steuerung einer Heckleuchtenbaugruppe oder bzw. Abstandsmesseinrichtung des Kraftfahrzeugs 18 dienen.

Die Kommunikations-Einrichtungen 11, 12, 13 kommunizieren über den Bus 10 miteinander, wobei jede über den Bus 10 übermittelte Nachricht von allen an den Bus 10 angeschlossenen Kommunikations-Einrichtungen 11, 12, 13 empfangen wird. Wenn die Kommunikations-Einrichtung 11 beispielsweise an die Kommunikations-Einrichtung 12 eine Nachricht, beispielsweise die in Figur 2 dargestellte Nachricht 19, sendet, so wird diese auch von der Kommunikations-Einrichtung 13 empfangen. Während die Nachricht 19 für die Kommunikations-Einrichtung 12 relevant ist, wird sie von der Kommunikations-Einrichtung 13 als irrelevant verworfen.

Die Nachricht 19 weist Daten 21 und einen Kennzeichner ID auf, der beispielsweise durch eine Zieladresse der Nachricht 19 oder einen Inhaltskennzeichner für deren Inhalt gebildet wird oder in der Zieladresse bzw. in dem Inhaltskennzeichner der Nachricht 19 enthalten ist. Der Kennzeichner I89 weist einen Wert w = 89 auf und bildet einen Bestandteil einer Kennzeichnergruppe IDG, die weitere Kennzeichner I5, I1, I8, I16 mit Werten w = 5, w = 1, w = 8, w = 16 enthält. Die Kennzeichner I5, I1, I8, I89, I16 markieren für die Kommunikations-Einrichtung 12 relevante Nachrichten, der Kennzeichner I89 z.B. die Nachricht 19. Die Kennzeichnergruppe IDG ist vorliegend als ein eindimensionales Feld (engl. array) aufgebaut.

Zur Relevanzprüfung von Kennzeichnern ist in der Kommunikations-Einrichtung 12 ein Prüfmodul 15 vorgesehen, das anhand einer Relevanztabelle 22; 22b, 22c, 22d einen in einer Nachricht enthaltenen Kennzeichner überprüft und das vorliegend ein durch die Kommunikations-Einrichtung 12 ausgeführtes Programmmodul ist. Bevor jedoch die Funktionsweise des Prüfmoduls 15 sowie von in den Kommunikations-Einrichtungen 11, 13 vorgesehenen, sinngemäß wie das Prüfmodul 15 funktionierenden Prüfmodulen 14, 16 näher erläutert wird, wird die Generierung der Relevanztabelle 22; 22b, 22c, 22d durch ein Generierungsmodul 20 dargelegt, das vorliegend ein durch ein Entwicklungswerkzeug 17 ausgeführtes Programmmodul ist.

Den Kennzeichnern I5, I1, I8, I89, I16 ordnet das Generierungsmodul 20 in der Relevanztabelle 22; 22b, 22c, 22d Plätze P0 bis P10 zu. Dabei wendet das Generierungsmodul 20 auf die Werte w = 5, w = 1, w = 8, w = 89, w = 16 der Kennzeichner I5, I1, I8, I89, I16 die folgende Rechenregel an, bei der p ein Index auf einen der Plätze P0 bis P10 der Relevanztabelle 22; 22b, 22c, 22d ist. Der Index p wird als ein ganzzahliger Rest bei einer Modulo-Operation mit einem Teiler d auf den jeweilige Wert w gebildet. Dabei ist der Teiler d eine Primzahl und entspricht der Anzahl der Plätze P0 bis P10. Im vorliegenden Beispiel ist d = 11.

Zweckmäßigerweise wird der Wert des Teilers d und somit die Anzahl der Plätze in einer Relevanztabelle etwa doppelt so groß gewählt, wie die Anzahl der einer jeweiligen Relevanztabelle zuzuordnenden Kennzeichner. Prinzipiell kann der Teiler d jedoch auch anders bestimmt werden. Es ist dafür zu sorgen, dass alle Kennzeichner einer Kennzeichnergruppe jeweils einem Platz in der jeweiligen Relevanztabelle zuordenbar sind.

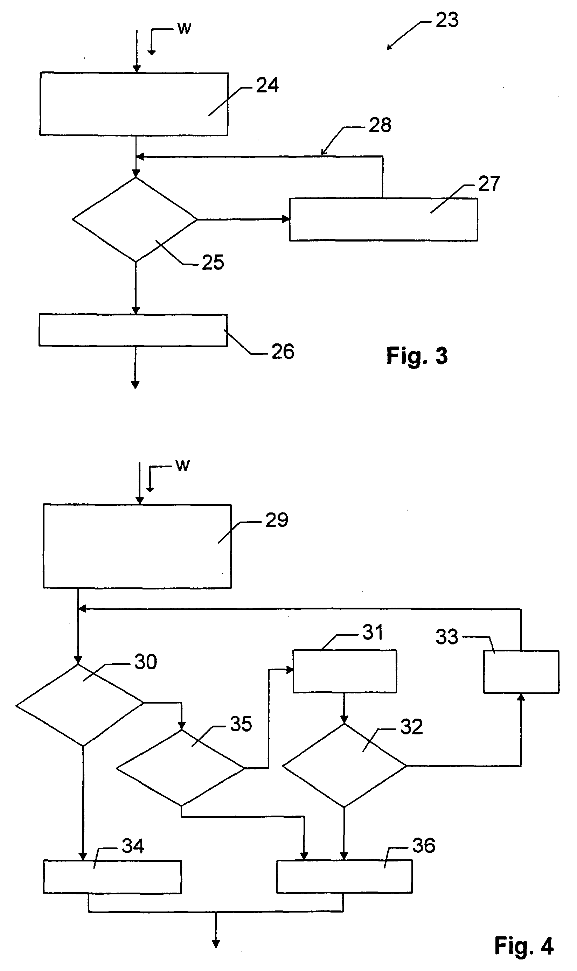

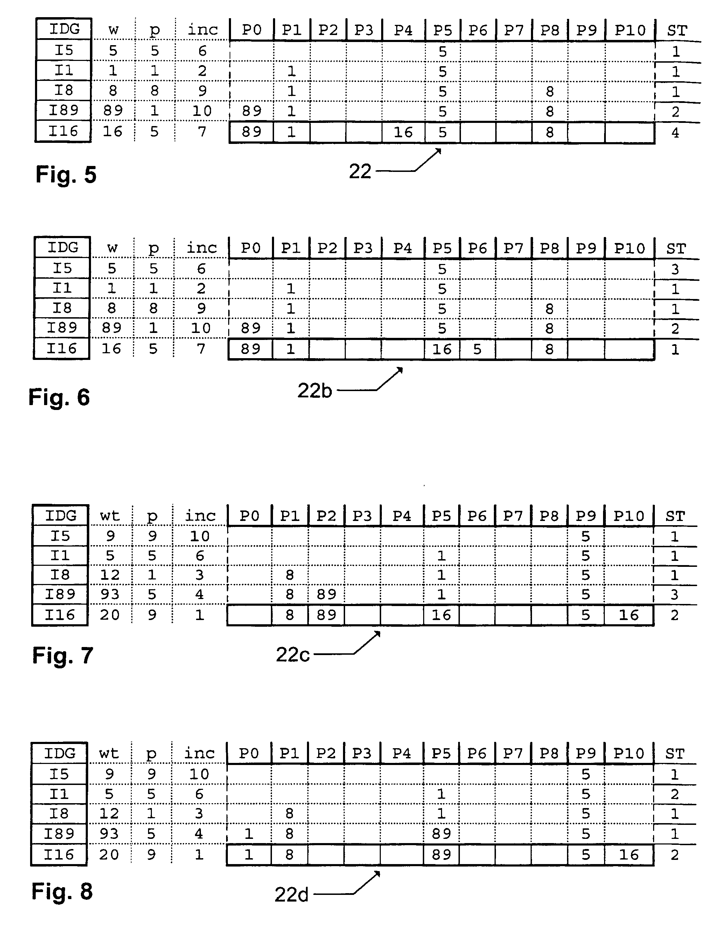

Das Generierungsmodul 20 führt bei der Zuordnung der Kennzeichner I5, I1, I8, I89, I16 zu den Plätzen P0 bis P10 z.B. das in Figur 3 dargestellte Verfahren 23 aus, bei dem die in Figur 5 dargestellte Relevanztabelle 22 erzeugt wird. Das Verfahren 23 wird für jeden der Kennzeichner I5, I1, I8, I89, I16 der Kennzeichnergruppe IDG durchgeführt.

In einem nicht dargestellten Schritt werden die Plätze P0 bis P10 zunächst mit einer Nichtbenutzungskennung versehen, wobei im Ausführungsbeispiel eine Leerkennung eingetragen wird.

In einem Schritt 24 wird die Rechenregel (1) auf den jeweiligen Wert w eines Kennzeichners I5, I1, I8, I89, I16 angewendet. Dabei werden für die Kennzeichner I5, I1, I8 die Zuordnungen zu den Plätzen P5, P1, P8 ermittelt. In einem Prüfschritt 25 wird jeweils überprüft, ob die Plätze P5, P1, P8 nicht bereits einem Kennzeichner zugeordnet sind. Dies ist jeweils nicht der Fall, d.h. es ist vorliegend jeweils eine Leerkennung eingetragen, wenn die Kennzeichner I5, I1, I8 den Plätzen P5, P1, P8 zuzuordnen sind, so dass das Generierungsmodul 20 in einem Schritt 26 die Werte w = 5, w = 1 und w = 8 der Kennzeichner I5, I1, I8 an den Plätzen P5, P1, P8 eintragen kann.

Bei der Anwendung der Rechenregel (1) im Schritt 24 auf den Wert w = 89 des Kennzeichners I89 wird jedoch im Prüfschritt 25 ermittelt, dass der Kennzeichner I89 dem bereits durch den Kennzeichner I1 belegten Platz P1 zuzuordnen ist. Es ist daher im Anschluss an den Prüfschritt 25 notwendig, in einem Fortschaltschritt 27 einen alternativen Platz in der Relevanztabelle 22 zu ermitteln und in einer Rückverzweigung 28 zum Prüfschritt 25 zurückzukehren, um zu überprüfen, ob der jeweils ermittelte Platz verfügbar ist. Dies trifft bei dem für den Kennzeichner I89 ermittelten Platz P0 zu.

Im Fortschaltschritt 27 werden die folgenden, insgesamt eine Fortschaltregel (2) bildenden Rechenregeln (2a) und (2b) nacheinander durchgeführt:

$$inc = (w \bmod (d-1)) + 1 \qquad (2a)$$

$$p_{n+1} = (p_n + inc) \bmod d \qquad (2b)$$

In der Rechenregel (2a), die auch bereits im Schritt 25 durchgeführt werden kann, wird ein Fortschaltwert inc aus dem jeweiligen Wert w eines Kennzeichners ermittelt. Der Fortschaltwert inc wird zum Index $p_n$ auf den aktuell bereits durch einen Kennzeichner belegten Platz hinzuaddiert. Im konkreten Fall lautet für den Kennzeichner I89 der Index $p_n = 1$ für den bereits durch den Kennzeichner I1 belegten Platz P1 und gemäss der Rechenregel (2a) der Fortschaltwert inc = 10. Nach Anwendung der Rechenregel (2b) auf die Summe $p_n$ + inc = 1 + 10 = 11 erhält man den auf den Platz P0 zeigenden Index $p_{n+1}$ = 0. Man erkennt, dass im vorliegenden Fall die Rechenregeln (1) und (2b) im Wesentlichen gleichlautend sind, mit dem Unterschied, dass gemäß Rechenregel (1) die Modulo-Operation mit dem Teiler d unmittelbar auf den Wert w eines Kennzeichners durchgeführt wird, während gemäß Rechenregel (2b) die Modulo-Operation mit dem Teiler d auf die Summe von Fortschaltwert inc und Index $p_n$ auf den aktuell ermittelten, bereits durch einen Kennzeichner belegten Platz durchgeführt wird.

Für den Kennzeichner I16 muss die Fortschaltregel (2) insgesamt dreimal angewendet werden, da nach Durchführung der Rechenregel (1) der durch den Kennzeichner I5 belegte Platz P5, und anschließend. bei dreimaliger Anwendung der Fortschaltregel (2) nacheinander die durch die Kennzeichner I1, I8 belegten Plätze P1, P8 und erst dann der Platz P4 ermittelt werden. Insgesamt sind zur Ermittlung des Platzes P4 vier Arbeitsschritte ST notwendig, was in der in Figur 5 in einer mit "ST" markierten Spalte vermerkt ist. Für die Kennzeichner I5, I1, I8 hingegen ist lediglich jeweils nur ein Arbeitsschritt ST erforderlich, nämlich die Anwendung der Rechenregel (1). Dies wirkt sich vorteilhaft bei der später beschriebenen Relevanzprüfung der Kennzeichner I5, I1, I8 aus.

Die nach dem Verfahren 23 erzeugte Relevanztabelle 22 ist in Figur 5 gezeigt, wobei zusätzlich zur besseren Erkennbarkeit der einzelnen Verfahrensschritte des Verfahrens 23 mit IDG, w, p, inc und ST bezeichnete Spalten sowie mit I5, I1, I8, I89 bezeichnete Zeilen eingezeichnet sind. Die Relevanztabelle 22 sowie sinngemäß auch die in den Figur 6 bis 8 gezeigten Relevanztabellen 22b, 22c, 22d können z.B. auch lediglich als Zahlenfolgen definiert sein, vorliegend mit beispielsweise mit Werten 89, 1, 255, 255, 16, 5, 255, 255, 8 , 255, 255, wobei dann "255" eine Nichtbenutzungskennung eines Platzes in der Folge ist und einen ungültigen Kennzeichner markiert. Es ist auch möglich, dass in der Relevanztabelle 22; 22b, 22c, 22d weitere Zeilen und/oder Spalten vorgesehen sind, in denen zur Weiterverarbeitung der jeweiligen Nachricht erforderliche Daten abgelegt sind.

Im Folgenden wird eine in Figur 4 dargestellte Relevanzprüfung des Kennzeichners I89 anhand der Relevanztabelle 22 durch das Prüfmodul 15 erläutert.

In einem Schritt 29 wird die Rechenregel (1) auf den Wert w = 89 des Kennzeichners I89 angewendet, wobei der Index des Platzes P1 ermittelt wird. Zudem wird ein Schrittzähler s z.B. auf s = 1 initialisiert, der dazu dient, dass die Anzahl von Arbeitsschritten in der Relevanztabelle 22 begrenzt wird. Prinzipiell könnte eine Maximalzahl smax für den Schrittzähler durch die Anzahl der Plätze P0 bis P10 der Relevanztabelle 22 gegeben sein. Vorliegend wird die Maximalzahl smax jedoch durch die maximal in der Spalte ST angegebene Anzahl von Arbeitsschritten definiert; bei der Relevanztabelle 22 lautet smax = 4.

In einem sich an den Schritt 29 anschließenden Prüfschritt 30 wird geprüft, ob der am Platz P1 eingetragene Wert mit dem Wert w = 89 des Kennzeichners I89 übereinstimmt. Dies ist nicht der Fall, da der Platz P1 dem Kennzeichner I1 zugeordnet ist und demnach dort der Wert w = 1 eingetragen ist. Anschließend wird in einem Prüfschritt 35 geprüft, ob an dem Platz P1 eine Nichtbenutzungskennung eingetragen ist, vorliegend eine Leerkennung. Auch dies ist nicht der Fall, da ja am Platz P1 w = 1 eingetragen ist.

Daher wird in einem Schritt 31 zunächst der Schrittzähler s um 1 erhöht und in einem anschließenden Prüfschritt 32 geprüft, ob der Schrittzähler s bereits die Maximalzahl smax überschritten hat. Im aktuellen Durchlauf ist der Schrittzähler s = 2, also kleiner als die Maximalzahl smax = 4.

Daher wird im Anschluss an den Prüfschritt 32 in einem Fortschaltschritt 33 ein alternativer Platz für den Kennzeichner I89 in der Relevanztabelle 22 ermittelt. Dazu werden, wie bereits anhand des Verfahrens 23 erläutert, die Rechenregeln (2a) und (2b) der Fortschaltregel (2) auf den Index $p_n$ = 1 des Platzes pl angewendet und somit der Platz P0 ermittelt. In den Fortschaltschritten 33 und 27 werden sinngemäß dieselben Operationen durchgeführt.

Nach dem Fortschaltschritt 33 wird im Prüfschritt 30 geprüft, ob der am Platz P0 eingetragene Wert mit dem Wert w = 89 des Kennzeichners I89 übereinstimmt. Da dies nun der Fall ist, wird in einem Ausgabeschritt 34 ausgegeben, dass der Kennzeichner I89 ein für die Kommunikations-Einrichtung 12 relevanter Kennzeichner und somit die Nachricht 19 eine relevante Nachricht sind.

Wenn der Wert des Kennzeichners I89 nicht w = 89, sondern beispielsweise w = 2 lauten würde, würde die Anwendung der Rechenregel (1) im Schritt 29 eine Zuordnung zum Platz 2 ergeben. Das Ergebnis im Prüfschritt 30 wäre dann zwar, dass w = 2 nicht bei P2 eingetragen ist. Allerdings würde dann im anschließenden Prüfschritt 35 ermittelt werden, das am Platz P2 eine Nichtbenutzungskennung eingetragen ist. Daher würde in einem anschließenden Ausgabeschritt 36 ausgegeben werden, dass der Kennzeichner I89 mit Wert w = 2 ein für die Kommunikations-Einrichtung 12 irrelevanter Kennzeichner ist und somit die Nachricht 19 eine irrelevante Nachricht ist.

Zu demselben Ergebnis "irrelevant", also zum Ausgabeschritt 36, kommt man im Prüfschritt 32, wenn nach mehr als der Maximalzahl von smax = 4 Arbeitsschritten weder ein Platz mit einer Nichtbenutzungskennung noch ein Platz gefunden worden ist, an dem der Wert des jeweils zu prüfenden Kennzeichners eingetragen ist. Ohne die Prüfung der Maximalzahl smax = 4 von Arbeitsschritten im Prüfschritt 32 wären bei der Relevanztabelle 22 im schlechtesten Fall 5 Arbeitsschritte zu einer Relevanzprüfung eines Kennzeichners erforderlich, da die Kennzeichnergruppe IDG insgesamt 5 Kennzeichner enthält, die jeweils einem der Plätze P0 bis P10 in der Relevanztabelle 22 zugeordnet sind.

Es versteht sich, dass das Prüfverfahren auch in einer sonstigen Ausführungsform, z.B. mit einer nicht dargestellten Reihenfolge von Schritten ausgestaltet sein kann. Beispielsweise können die Prüfschritte 30, 32, 35 in beliebiger Reihenfolge nacheinander durchgeführt werden.

Zwar bringt es schon eine Verbesserung der Relevanzprüfung, dass nicht mehr als 4 Arbeitsschritte erforderlich sind, um bei einem zu prüfenden Kennzeichner das Ergebnis "irrelevant" zu ermitteln. Zudem kann es der Fall sein, dass beispielsweise die Kennzeichner I5, I1, I8 sehr häufig von der Kommunikations-Einrichtung 12 empfangen werden, so dass der Aufbau der Relevanztabelle 22, bei dem für die Relevanzprüfung der Kennzeichner I5, I1, I8 jeweils nur ein Arbeitsschritt erforderlich ist, für die Kommunikations-Einrichtung 12 gut geeignet ist.

Allerdings kann die Relevanztabelle 22 dahingehend optimiert werden, dass weniger Arbeitsschritte notwendig sind, um bei einem zu prüfenden Kennzeichner das Ergebnis "relevant" oder "irrelevant" festzustellen, wobei vorliegend bei einem irrelevanten Kennzeichner im Prüfschritt 32 das Prüfverfahren beendet wird.

Das Generierungsmodul 20 optimiert die Relevanztabelle 22 nach Kriterien, die ihm durch einen Benutzer vorgegeben werden oder beispielsweise auch automatisch. Ein bevorzugtes Kriterium ist beispielsweise, dass die Zahl der durchschnittlich bei einer Relevanzprüfung erforderlichen Arbeitsschritte verringert wird. Für die Relevanztabelle 22 kann z.B. vorgegeben sein, dass eine Arbeitsschritt-Maximalzahl smax = 2 einzuhalten ist.

Es hat sich als vorteilhaft erwiesen, zunächst die jeweilige Relevanztabelle zu vergrößern, so dass Kollisionen mehrerer auf einen Relevanztabellenplatz treffender Kennzeichner vermieden werden, und anschließend eines oder mehrere der folgenden Optimierungsverfahren anzuwenden. Aus Gründen der Anschaulichkeit wird allerdings auf eine Vergrößerung der Relevanztabelle 22 im vorliegenden Fall verzichtet.

Eine Optimierungsmethode besteht darin, die Zuordnungen von miteinander bei der Zuordnung zu einem Platz kollidierenden Kennzeichner zu vertauschen. Problematisch in diesem Sinne sind beispielsweise in der Relevanztabelle 22 die Zuordnungen der Kennzeichner I5 und I16 zu den Plätzen P5 und P4, die durch die bevorzugte Einordnung des Kennzeichners I5 verursacht wird. Prinzipiell können die Kennzeichner I5, I1, I8, I89, I16 der Kennzeichnergruppe IDG auch in einer anderen Reihenfolge in die Relevanztabelle 22 eingetragen werden.

Zu einer diesbezüglichen Optimierung ist in der in Figur 6 gezeigten modifizierten Relevanztabelle 22b zwar zunächst der Kennzeichner I5 dem Platz P5 zugeordnet worden, anschließend aber ist der Kennzeichner I16 dem Platz P5 zugeordnet worden und für den Kennzeichner I5 durch Anwendung des Verfahrens 23 der Ersatz-Platz P6 ermittelt worden. Es ist auch möglich, dass die Reihenfolge der Kennzeichner I5 und I16 in der Kennzeichnergruppe IDG vor der Zuordnung zu den Plätzen P0 bis P10 der Relevanztabelle 22b vertauscht wird.

Man erkennt in der Spalte ST, dass nunmehr die Maximalzahl smax = 3 lautet, also 3 Arbeitsschritte bei einer Relevanzprüfung erforderlich sind.

Eine weitere Optimierungsmethode ist bei der in Figur 7 gezeigten Relevanztabelle 22c angewendet worden. Dabei werden die Werte w = 5, w = 1, w = 8, w = 89, w = 16 der Kennzeichner I5, I1, I8, I89, I16 auf transformierte Werte wt = 9, wt = 5, wt = 12, wt = 93, wt = 20 abgebildet. Die Transformationsformel (3) hierzu lautet (für das Beispiel aus Figur 7):

$$wt = w + z \qquad (3)$$

In die Transformationsformel (3) ist vorliegend ein Zahlwert z = 4 eingesetzt. Bei der Bildung der Relevanztabelle 22c sind dann anstatt der Werte w die transformierten, in einer mit wt bezeichneten Spalte angegebenen Werte wt in die Rechenregel (1) und die Rechenregel (2a) der Fortschaltregel (2) eingesetzt. Es ergibt sich wie bei der Relevanztabelle 22b aus Figur 6 eine Maximalzahl smax = 3.

Für den Zahlwert z werden bei einem Optimierungslauf vorteilhaft alle Werte, die zwischen 0 und d-1 liegen, durchprobiert und die sich dabei jeweils ergebende Maximalzahl smax ermittelt. Somit kann ein optimaler Zahlwert z ermittelt werden. Es ist auch möglich, dass eine sonstige Transformationsformel verwendet wird. Beispielsweise könnte der Wert w mit dem Wert z multipliziert werden, z.B. wt = w * z. Ferner könnte eine Kombination aus Addition und Multiplikation durchgeführt werden, z.B. wt = (w + z) * m, wobei "m" ein wählbarer und optimierbarer Multiplikator ist . Das Generierungsmodul 20 kann bei einem Optimierungslauf jedenfalls diverse Transformationsformeln durchprobieren, so dass eine gleichmäßige Verteilung der Kennzeichner I5, I1, I8, I89, I16 auf die Relevanztabelle 22 bewirkt wird.

Eine Kombination der anhand der Figuren 6 und 7 gezeigten Optimierungsmethoden ist bei der in Figur 8 gezeigten Relevanztabelle 22d angewendet worden. Dabei ist zum einen die Transformationsformel (3) mit einem Zahlwert z = 4 auf die Werte der Kennzeichner I5, I1, I8, I89, I16 angewendet und zum andern ist die Zuordnung des Kennzeichners I89, zu dessen Platzierung in der Relevanztabelle 22c noch drei Arbeitsschritte erforderlich waren, geändert. Der Kennzeichner I89 ist dabei bevorzugt vor dem Kennzeichner I1 platziert worden, so dass die Kennzeichner I89, I1 den Plätzen P5 bzw. P0 zugeordnet sind. Die Maximalzahl smax beträgt bei der Relevanztabelle 22d, wie ursprünglich angestrebt, smax = 2.

Es versteht sich, dass die obengenannten Optimierungsmethoden prinzipiell in beliebiger Reihenfolge und Kombination von dem Generierungsmodul 20 angewendet werden können, so dass letztlich eine für eine Kennzeichnergruppe optimale Relevanztabelle erzeugt wird. Die jeweils erzeugte Relevanztabelle sowie die dabei benutzen Formeln, die Rechenregel (1), die Fortschaltregel (2) und gegebenenfalls die Transformationsformel (3) werden dann dem jeweiligen Prüfmodul zur Verfügung gestellt.

Es ist auch möglich, dass ein Programmcode eines Prüfmoduls, z.B. des Prüfmoduls 15, bereits die Rechenregel (1), die Fortschaltregel (2) und gegebenenfalls die Transformationsformel (3) und/oder die jeweilige Relevanztabelle, in Figur 1 z.B. die Relevanztabelle 22d, enthält. Vorteilhafterweise ist das Generierungsmodul 20 dann dazu ausgestaltet, das jeweilige Prüfmodul zu erzeugen oder für ein nicht dargestelltes, z.B. durch das Entwicklungswerkzeug 17 ausgeführtes Erzeugungsmodul und/oder Programmierwerkzeug, das z.B. einen Kompiler und einen Linker enthält, bereitzustellen, wie in Figur 1 anhand eines gestrichelt bei dem Entwicklungswerkzeug 17 eingezeichneten Prüfmodul 15 angedeutet ist. Das so erzeugte Prüfmodul, z.B. das Prüfmodul 15, und/oder die jeweilige Relevanztabelle, z.B. die Relevanztabelle 22d, wird dann von dem Entwicklungswerkzeug 17 für die jeweilige Kommunikations-Einrichtung bereitgestellt, im Ausführungsbeispiel beispielsweise wird das Prüfmodul 15 über eine Verbindung 37 in die Kommunikations-Einrichtung 12 geladen.

Es ist auch möglich, dass das Prüfmodul 15 von dem Entwicklungswerkzeug 17 dazu verwendet wird, eine durch das Generierungsmodul 20 erzeugte Relevanztabelle, z.B. die Relevanztabelle 22d, überprüfen.

Das Entwicklungswerkzeug 17, das insbesondere ein Personal Computer oder Workstation ist, sowie die Kommunikations-Einrichtungen 11, 12, 13 sind in Figur 1 lediglich schematisch dargestellt. Die jeweiligen Funktionsbaugruppen dieser Einrichtungen sind aus funktionaler Sicht gleichartig, in ihrer konkreten Ausgestaltung, insbesondere in ihrer Leistungsfähigkeit, unterschiedlich.

Das Entwicklungswerkzeug 17 und die Kommunikations-Einrichtungen 11, 12, 13 weisen jeweils untereinander durch nicht dargestellte Verbindungen verbundene Steuermittel 40, Speichermittel 41 und Sende- und Empfangsmittel 42 auf. Die Steuermittel 40 sind beispielsweise einzelne Prozessoren oder Prozessoranordnungen, mit denen Programm-Code von Programm-Modulen ausgeführt werden kann, die in den Speichermitteln 41 gespeichert sind. Die Steuermittel 40 der Kommunikations-Einrichtungen 11, 12, 13 führen z.B. den Programmcode der Prüfmodule 14 , 15, 16 aus, die Steuermittel 40 des Entwicklungswerkzeugs 17 den Programmcode des Generierungsmoduls 20. Bei den Speichermitteln 41 handelt es sich z.B. um Festplatten und/oder um als Arbeitsspeicher dienende RAM-Bausteine (RAM = Random Access Memory). Bei den Kommunikations-Einrichtungen 11, 12, 13 werden die Steuermittel 40 beispielsweise durch digitale Mikroprozessoren gebildet.

Weitere, insbesondere bei dem Entwicklungswerkzeug 17 vorgesehen Komponenten, beispielsweise Anzeigemittel (Bildschirm oder LCD-Display) sowie Eingabemittel (Tastatur und/oder Maus), sind aus Gründen der Übersichtlichkeit nicht dargestellt. Die Kommunikations-Einrichtungen 11, 12, 13 können beispielsweise einen Bestandteil eine Baugruppe des Kraftfahrzeuges 18 bilden, z.B. in eine Heckleuchtenbaugruppe integriert sein.

Varianten der Erfindung sind ohne Weiteres möglich:

Beispielsweise könnte anstatt der Rechenregel (1) eine sonstige, eine Zuordnung der Kennzeichner I5, I1, I8, I89, I16 zu der Relevanztabelle 22; 22b, 22c, 22d ermöglichende Rechenregel vorgesehen sein. Ferner könnte auch die Fortschaltregel (2) modifiziert oder durch eine alternative Fortschaltregel ersetzt werden.

Die Prüfmodule 14 , 15, 16 können auch als Hardware realisiert sein, beispielsweise in integrierte Schaltkreise der Sende- und Empfangsmittel 42 integriert sein.

Die jeweiligen Relevanztabellen können einen Bestandteil der Prüfmodule 14 , 15, 16 bilden oder jeweils von diesen eingelesen werden. Beispielsweise könnte eine Relevanztabelle in einem ROM-Speicher abgelegt sein, den das Entwicklungswerkzeug 17 für das Prüfmodul 15 konfiguriert.

Es ist auch möglich, dass das Generierungsmodul 20 durch die Steuermittel 40 ausgeführt wird. Beispielsweise könnte das Generierungsmodul 20 dann, wenn eine für eine der Kommunikations-Einrichtungen 11, 12, 13 relevante Nachricht definiert wird und somit ein weiterer Kennzeichner für die jeweilige Kommunikations-Einrichtung relevant ist, den jeweiligen Kennzeichner in eine in der Kommunikations-Einrichtung oder in dem jeweiligen Prüfmodul vorhandene Relevanztabelle einordnen, gegebenenfalls auch die oben erläuterte Optimierung der jeweiligen Relevanztabelle 22 vornehmen.

**Patentansprüche**

**1.** Generierungsverfahren zur Bildung einer Relevanztabelle (22; 22b, 22c, 22d) für eine Kommunikations-Einrichtung (11, 12, 13) zur Relevanzprüfung von Kennzeichnern (I89; I5, I1, I8, I16) einer Kennzeichnergruppe (IDG) im Rahmen eines Hash-Verfahrens, wobei die Kennzeichner (I89; I5, I1, I8, I16) zur Kennzeichnung von für die Kommunikations-Einrichtung (11, 12, 13) relevanten, über ein Kommunikationsnetz (10) übermittelbaren Nachrichten (19) vorgesehen sind, wobei bei dem Generierungsverfahren keinem Kennzeichner (I89; I5, I1, I8, I16) der Kennzeichnergruppe (IDG) zugeordnete Plätze (P2, P3, P6, P7, P9, P10) in der Relevanztabelle (22; 22b, 22c, 22d) mit einer Nichtbenutzungskennung markiert werden, und wobei für jeden Kennzeichner (I89; I5, I1, I8, I16) der Kennzeichnergruppe (IDG) ein freier, mit einer Nichtbenutzungskennung versehener Platz in der Relevanztabelle ermittelt und der Kennzeichner (I89; I5, I1, I8, I16) oder ein diesem zugeordneter Wert (w) an dem ermittelten freien Platz (P0, P1; P0 - P10) eingetragen wird, und wobei im Rahmen eines Hash-Verfahrens ein erster Platz (P1; P0 - P10) in der Relevanztabelle durch Anwendung einer Rechenregel (1) auf den Kennzeichner (I89; I5, I1, I8, I16) ermittelt wird,

**dadurch gekennzeichnet,**

- **dass** im Rahmen des Hash-Verfahrens in einem Kollisionsfall, bei dem der jeweils ermittelte Platz nicht frei ist, durch Anwendung einer Fortschaltregel (2) auf den jeweiligen Kennzeichner (I89; I5, I1, I8, I16) und einen Index auf den jeweils aktuell ermittelten, nicht freien Platz solange weitere Plätze in derselben Relevanztabelle ausgehend vom jeweils ermittelten Platz ermittelt werden, bis ein freier Platz in der Relevanztabelle (22; 22b, 22c, 22d) gefunden ist,

- **dass** für jeden Kennzeichner (I89; I5, I1, I8, I16) der Kennzeichnergruppe (IDG) die Anzahl der zu dessen Platzierung in der Relevanztabelle (22; 22b, 22c, 22d) erforderlichen Arbeitsschritte ermittelt wird, wobei jede Anwendung der Rechenregel und der Fortschaltregel als Arbeitsschritt zählt, und

- **dass** die größte zur Platzierung eines Kennzeichners (I89; I5, I1, I8, I16) der Kennzeichnergruppe (IDG) erforderliche Anzahl von Arbeitsschritten als eine Maximalzahl (smax) von Arbeitsschritten zu der Relevanztabelle bereitgestellt wird, wobei die Maximalzahl (smax) größer als 1 ist, so dass die Maximalzahl (smax) als ein Abbruchkriterium bei einer Relevanzprüfung eines nicht in der Kennzeichnergruppe (IDG) enthaltenen Kennzeichners anhand der Relevanztabelle genutzt werden kann.

**2.** Generierungsverfahren nach Anspruch 1, **dadurch gekennzeichnet, dass** die Zuordnung der Kennzeichner (I89; I5, I1, I8, I16) der Kennzeichnergruppe (IDG) zu den Plätzen (P2, P3, P6, P7, P9, P10) der Relevanztabelle (22; 22b, 22c, 22d) umgeordnet wird, um die Maximalzahl (smax) von Arbeitsschritten zu verkleinern, wobei

- die Anzahl der den Kennzeichnern (I89; I5, I1, I8, I16) der Kennzeichnergruppe (IDG) in der Relevanztabelle (22; 22b, 22c, 22d) zuordenbaren Plätze (P0 - P10) vergrößert oder verkleinert wird und/oder
- die Kennzeichner (I89; I5, I1, I8, I16) der Kennzeichnergruppe (IDG) im Rahmen der Anwendung der Rechenregel (1) auf eine Abbildungsmenge transformiert werden, anhand derer den jeweiligen Kennzeichnern (I89; I5, I1, I8, I16) Plätze in der Relevanztabelle (22; 22b, 22c, 22d) zuordenbar sind und/oder
- Zuordnungen von miteinander bei der Zuordnung zu einem Platz kollidierenden Kennzeichnern (I89; I5, I1, I8, I16) der Kennzeichnergruppe (IDG) vertauscht werden.

**3.** Generierungsverfahren nach Anspruch 1 oder 2, **dadurch gekennzeichnet, dass** zumindest einem Kennzeichner (I89; I5, I1, I8, I16) der Kennzeichnergruppe (IDG) ein Platz (P0 - P10) in der Relevanztabelle (22; 22b, 22c, 22d) optimiert zugeordnet wird, so dass die Anzahl der zum Auffinden des Platzes (P0 - P10) erforderlichen Arbeitsschritte verkleinert ist, wobei zur Optimierung

- die Anzahl der den Kennzeichnern (I89; I5, I1, I8, I16) der Kennzeichnergruppe (IDG) in der Relevanztabelle (22; 22b, 22c, 22d) zuordenbaren Plätze (P0 - P10) vergrößert oder verkleinert wird und/oder
- die Kennzeichner (I89; I5, I1, I8, I16) der Kennzeichnergruppe (IDG) im Rahmen der Anwendung der Rechenregel (1) auf eine Abbildungsmenge transformiert werden, anhand derer den jeweiligen Kennzeichnern (I89; I5, I1, I8, I16) Plätze in der Relevanztabelle (22; 22b, 22c, 22d) zuordenbar sind.

**4.** Generierungsverfahren nach Anspruch 2 oder 3, **dadurch gekennzeichnet, dass** die Abbildungsmenge derart gebildet wird, dass die den jeweiligen Kennzeichnern (I89; I5, I1, I8, I16) zugeordneten Plätze gleichmäßig und unter Vermeidung von Kollisionsfällen in der Relevanztabelle (22; 22b, 22c, 22d) angeordnet sind und/oder dass zu jedem Kennzeichner (I89; I5, I1, I8, I16) der Kennzeichnergruppe (IDG) ein insbesondere als Zufallszahl oder aus einer Zahlenreihe ermittelter Zahlwert (z) addiert oder subtrahiert wird und/oder dass die Kennzeichner (I89; I5, I1, I8, I16) jeweils mit einem Multiplikator multipliziert und/oder dass logische Operationen, insbesondere logisch "UND", logisch "ODER" oder "Shift", angewendet werden.

**5.** Generierungsverfahren nach einem der Ansprüche 3 oder 4, **dadurch gekennzeichnet, dass** Zuordnungen von miteinander bei der Zuordnung zu einem Platz kollidierenden Kennzeichnern (I89; I5, I1, I8, I16) der Kennzeichnergruppe (IDG) vertauscht werden.

**6.** Generierungsverfahren nach einem der Ansprüche 3 bis 5, **dadurch gekennzeichnet, dass** der mindestens eine, optimiert in der Relevanztabelle (22; 22b, 22c, 22d) zu platzierende Kennzeichner (I89; I5, I1, I8, I16) nach einem vorbestimmten Kriterium ausgewählt wird, insbesondere nach einer erwarteten Übertragungshäufigkeit oder nach einer Priorität der ihn jeweils enthaltenden Nachricht (19).

**7.** Generierungsverfahren nach einem der vorhergehenden Ansprüche, **dadurch gekennzeichnet, dass** bei der Anwendung der Rechenregel (1) und/oder der Fortschaltregel (2) ein Indikator auf den jeweiligen ersten und/oder den jeweiligen weiteren Platz (P0; P0 - P10) ermittelt wird, indem ein Wert (w) der Kennzeichner (I89; I5, I1, I8, I16) bzw. ein aus diesem anhand der Fortschaltregel (2) gebildeter Fortschaltwert (inc) durch eine Primzahl geteilt werden, die der Anzahl von in der Relevanztabelle (22; 22b, 22c, 22d) für Kennzeichner (I89; I5, I1, I8, I16) vorgesehenen Plätzen entspricht, wobei der Indikator insbesondere als der ganzzahlige Rest einer Division des Werts (w) der Kennzeichner (I89; I5, I1, I8, I16) durch die Primzahl ermittelt wird.

**8.** Generierungsverfahren nach einem der vorhergehenden Ansprüche, **dadurch gekennzeichnet, dass** der Kennzeichner (I89; I5, I1, I8, I16) in einer Adressangabe, insbesondere in einer Zieladresse, einer jeweiligen Nachricht (19) und/oder in einem Inhaltskennzeichner für einen Inhalt der jeweiligen Nachricht (19) enthalten ist.

**9.** Generierungsverfahren nach einem der vorhergehenden Ansprüche, **dadurch gekennzeichnet, dass** als Kommunikationsnetz (10) ein Broadcast-Netzwerk verwendet wird und/oder dass als Kommunikationsnetz (10) ein Bus-System, insbesondere ein CAN-Bussystem oder ein LIN-Bussystem, verwendet wird.

**10.** Generierungsverfahren nach einem der vorhergehenden Ansprüche, **dadurch gekennzeichnet, dass** als Nichtbenutzungskennung eine Leerkennung und/oder ein einem ungültigen, nicht in der Kennzeichnergruppe (IDG) enthaltenen Kennzeichner (I89; I5, I1, I8, I16) zugeordneter Wert vorgesehen sind.

11. Prüfverfahren zur Relevanzprüfung eines Kennzeichners (I89; I5, I1, I8, I16), der einer Kommunikations-Einrichtung (11, 12, 13) über ein Kommunikationsnetz (10) in einer Nachricht (19) übermittelbar ist, wobei für einen empfangenen Kennzeichner im Rahmen eines Hash-Verfahrens ein erster Platz (P1; P0 - P10) in einer Relevanztabelle durch Anwendung einer Rechenregel (1) auf den Kennzeichner (I89; I5, I1, 18, I16) ermittelt wird, und wobei der empfangene Kennzeichner (I89; I5, I1, I8, I16) als relevant eingestuft wird, wenn an dem ersten Platz (P0, P1; P0 - P10) der Kennzeichner (I89; I5, I1, I8, I16) eingetragen ist, **dadurch gekennzeichnet,**

  - **dass** im Rahmen des Hash-Verfahrens in einem Kollisionsfall, bei dem an dem jeweils ermittelten Platz (P0, P1; P0 - P10) ein anderer Kennzeichner (I89; I5, I1, I8, I16) oder ein diesem zugeordneter Wert (w) eingetragen ist, durch Anwendung einer Fortschaltregel (2) auf den empfangenen Kennzeichner (I89; I5, I1, I8, I16) und einen Index auf den jeweils aktuell ermittelten Platz solange weitere Plätze in derselben Relevanztabelle ausgehend vom jeweils ermittelten Platz ermittelt werden, bis ein Platz in der Relevanztabelle (22; 22b, 22c, 22d) gefunden ist, an dem der empfangene Kennzeichner (I89; I5, I1, I8, I16) oder ein diesem zugeordneter Wert (w) eingetragen ist,
  - **dass** die Anwendung der Rechenregel und der Fortschaltregel jeweils als ein Arbeitsschritt gezählt werden und die Prüfung des empfangenen Kennzeichners nach einer Maximalzahl (smax) von Arbeitsschritten abgebrochen wird,
  - **dass** der empfangene Kennzeichner als relevant eingestuft wird, wenn an dem aktuell ermittelten ersten oder weiteren Platz (P0, P1; P0 - P10) der Kennzeichner (I89; I5, I1, I8, I16) oder ein diesem zugeordneter Wert (w) eingetragen ist, und
  - **dass** der empfangene Kennzeichner als irrelevant eingestuft wird, wenn der jeweils aktuell ermittelte Platz ein freier, mit einer Nichtbenutzungskennung versehener Platz ist oder wenn nach der Maximalzahl (smax) von Arbeitsschritten, kein Platz gefunden wurde, an dem der empfangene Kennzeichner (I89; I5, I1, I8, I16) oder ein diesem zugeordneter Wert (w) eingetragen ist, wobei die Maximalzahl (smax) größer als 1 ist und im Rahmen eines Generierungsverfahrens der Relevanztabelle zugeordnet worden ist.

12. Prüfverfahren nach Anspruch 11, **dadurch gekennzeichnet, dass** die Maximalzahl (smax) von Arbeitsschritten verkleinert worden ist, indem die Zuordnung der Kennzeichner (I89; I5, I1, I8, 116) der Kennzeichnergruppe (IDG) zu den Plätzen (P2, P3, P6, P7, P9, P10) der Relevanztabelle (22; 22b, 22c, 22d) umgeordnet worden ist, wobei

  - die Anzahl der den Kennzeichnern (I89; I5, I1, I8, I16) der Kennzeichnergruppe (IDG) in der Relevanztabelle (22; 22b, 22c, 22d) zuordenbaren Plätze (P0 - P10) vergrößert oder verkleinert worden ist und/oder
  - die Kennzeichner (I89; I5, I1, I8, I16) der Kennzeichnergruppe (IDG) im Rahmen der Anwendung der Rechenregel (1) auf eine Abbildungsmenge transformiert worden sind, anhand derer den jeweiligen Kennzeichnern (I89; I5, I1, I8, I16) Plätze in der Relevanztabelle (22; 22b, 22c, 22d) zuordenbar sind und/oder
  - Zuordnungen von miteinander bei der Zuordnung zu einem Platz kollidierenden Kennzeichnern (I89; I5, I1, I8, I16) der Kennzeichnergruppe (IDG) vertauscht worden sind.

13. Prüfverfahren nach Anspruch 11 oder 12, **dadurch gekennzeichnet, dass** bei der Ermittlung der Plätze (P0; P0 - P10) in der Relevanztabelle (22; 22b, 22c, 22d) für den Kennzeichner (I89; I5, I1, I8, I16) eine Rechenregel (1) angewendet wird, durch die die Kennzeichner (I89; I5, I1, I8, I16) der Kennzeichnergruppe (IDG) auf eine Abbildungsmenge transformiert werden, anhand derer den jeweiligen Kennzeichnern (I89; I5, I1, I8, I16) Plätze in der Relevanztabelle (22; 22b, 22c, 22d) zuordenbar sind, wobei die Abbildungsmenge insbesondere derart gebildet wird, dass die den jeweiligen Kennzeichnern (I89; I5, I1, I8, I16) zugeordneten Plätze gleichmäßig und unter Vermeidung von Kollisionsfällen in der Relevanztabelle (22; 22b, 22c, 22d) angeordnet sind und/oder bei der jedem Kennzeichner (I89; I5, I1, I8, I16) der Kennzeichnergruppe (IDG) ein insbesondere als Zufallszahl oder aus einer Zahlenreihe ermittelter Zahlwert (z) addiert oder subtrahiert wird und/oder bei der die Kennzeichner (I89; I5, I1, I8, I16) jeweils mit einem Multiplikator multipliziert und/oder bei der logische Operationen, insbesondere logisch "UND", logisch "ODER" oder "Shift", angewendet werden.

14. Prüfverfahren nach einem der Ansprüche 11 bis 13, **dadurch gekennzeichnet, dass** bei der Anwendung der Rechenregel (1) und/oder der Fortschaltregel (2) ein Indikator auf den jeweiligen ersten und/oder den jeweiligen weiteren Platz (P0; P0 - P10) ermittelt wird, indem ein Wert (w) der Kennzeichner (I89; I5, I1, I8, I16) bzw. ein aus diesem anhand der Fortschaltregel (2) gebildeter Fortschaltwert (inc) durch eine Primzahl geteilt werden, die der Anzahl von in der Relevanztabelle (22; 22b, 22c, 22d) für Kennzeichner (I89; I5, I1, I8, I16) vorgesehenen Plätzen entspricht, wobei der Indikator insbesondere als der ganzzahlige Rest einer Division des Werts (w) der Kennzeichner (I89; I5, I1, I8, I16) durch die Primzahl ermittelt wird.

15. Prüfverfahren nach einem der Ansprüche 11 bis 14, **dadurch gekennzeichnet, dass** der Kennzeichner (I89; I5, I1, I8, I16) in einer Adressangabe, insbesondere in einer Zieladresse, einer jeweiligen Nachricht (19) und/oder in einem Inhaltskennzeichner für einen Inhalt der jeweiligen Nachricht (19) enthalten ist.

16. Prüfverfahren nach einem der Ansprüche 11 bis 15, **dadurch gekennzeichnet, dass** als Kommunikationsnetz (10) ein Broadcast-Netzwerk verwendet wird und/oder dass als Kommunikationsnetz (10) ein Bus-System, insbesondere ein CAN-Bussystem oder ein LIN-Bussystem, verwendet wird.

17. Prüfverfahren nach einem der Ansprüche 11 bis 16, **dadurch gekennzeichnet, dass** als Nichtbenutzungskennung eine Leerkennung und/oder ein einem ungültigen, nicht in der Kennzeichnergruppe (IDG) enthaltenen Kennzeichner (I89; I1, I8, I16) zugeordneter Wert vorgesehen sind.

18. Generierungsmodul zur Bildung einer Relevanztabelle (22; 22b, 22c, 22d) für eine Kommunikations-Einrichtung (11, 12, 13) zur Relevanzprüfung von Kennzeichnern (I89; I5, I1, I8, I16) einer Kennzeichnergruppe (IDG) im Rahmen eines Hash-Verfahrens, die zur Kennzeichnung von für die Kommunikations-Einrichtung (11, 12, 13) relevanten, über ein Kommunikationsnetz (10) übermittelbaren Nachrichten (19) vorgesehen sind, mit Markiermitteln zum Markieren von in der Relevanztabelle (22; 22b, 22c, 22d) vorgesehenen, keinem Kennzeichner (I89; I5, I1, I8, I16) der Kennzeichnergruppe (IDG) zugeordneten freien Plätzen mit einer Nichtbenutzungskennung und mit Platziermitteln

- zum Ermitteln eines ersten Platzes (P1; P0 - P10) in der Relevanztabelle im Rahmen eines Hash-Verfahrens durch Anwendung einer Rechenregel (1) auf den Kennzeichner (I89; I5, I1, I8, I16) und Eintragen des Kennzeichners (I89; I5, I1, I8, I16) oder eines diesem zugeordneten Werts (w) an dem ersten Platz, wenn der erste Platz frei ist, und
- zur Ausführung der im kennzeichnenden Teil des Anspruchs 1 angegebenen Schritte für jeden Kennzeichner (I89; I5, I1, I8, I16) der Kennzeichnergruppe (IDG).

19. Prüfmodul zur Relevanzprüfung eines Kennzeichners (I89; I5, I1, I8, I16), der einer Kommunikations-Einrichtung (11, 12, 13) über ein Kommunikationsnetz (10) in einer Nachricht (19) übermittelbar ist, mit Prüfmitteln zur Ausführung der Prüfschritte des Prüfverfahrens gemäß Anspruch 11 für einen empfangenen Kennzeichner im Rahmen eines Hash-Verfahrens.

20. Kommunikations-Einrichtung (11, 12, 13) mit einem Generierungsmodul nach Anspruch 18 und/oder mit einem Prüfmodul nach Anspruch 19.

21. Kraftfahrzeug und/oder Entwicklungswerkzeug mit einer Kommunikations-Einrichtung (11, 12, 13) nach Anspruch 20 und/oder einem Generierungsmodul nach Anspruch 18 und/oder mit einem Prüfmodul nach Anspruch 19.

22. Generierungsmodul nach Anspruch 18 und/oder Prüfmodul nach Anspruch 19, **dadurch gekennzeichnet, dass** sie jeweils Programmcode enthalten, der von einem Steuermittel (40) einer Kommunikations-Einrichtung (11, 12, 13) und/oder eines Entwicklungswerkzeugs (17) ausgeführt werden kann.

23. Speichermittel, insbesondere Diskette, CD-ROM, Digital Versatile Disc, Festplattenlaufwerk oder dergleichen, mit einem darauf gespeicherten Generierungsmodul und/oder Prüfmodul nach Anspruch 22.

**Claims**

1. Generation process for creating a relevance table (22; 22b, 22c, 22d) for a communication device (11, 12, 13), for the relevance checking of qualifiers (I89; I5, I1, I8, I16) of a qualifier group (IDG) as part of a hash process, wherein the qualifiers (I89; I5, I1, I8, I16) are provided for the identification of messages (19) relevant to the communication device (11, 12, 13) and transmitted over a communication network (10), wherein during the generation process no places (P2, P3, P6, P7, P9, P10) in the relevance table (22; 22b, 22c, 22d) assigned to qualifiers (I89; I5, I1, I8, I16) of the qualifier group (IDG) are marked with a non-use code, and wherein for each qualifier (I89; I5, I1, I8, I16) of the qualifier group (IDG) a free place in the relevance table provided with a non-use code is determined and the qualifier (I89; I5, I1, I8, I16) or a value (w) assigned to it is entered at the determined free place (P0, P1; P0 - P 10), and wherein as part of a hash process a first place (P1; P0 - P10) in the relevance table is determined by the application of a computation rule (1) to the qualifiers (I89; I5, I1, I8, I16)

- in the course of the hash process, in the event of a conflict in which the particular place determined is not free, by application of a stepping rule (2) to the qualifier (I89; I5, I1, I8, I16) concerned and an index to the respective, currently determined occupied place, further places in the same relevance table are determined, starting from the place determined in each case, until a free place in the relevance table (22; 22b, 22c, 22d) has been found,

- that for each qualifier (I89; I5, I1, I8, I16) of the qualifier group (IDG), the number of steps required for its placing in the relevance table (22; 22b, 22c, 22d) is determined, with each application of the computation rule and the stepping rule counting as one step, and

- that the maximum number of steps required for the placing of a qualifier (I89; I5, I1, I8, I16) of the qualifier group (IDG) is made available to the relevance table as a maximum number (smax), wherein the maximum number (smax) is greater than 1, so that the maximum number (smax) may be utilised with the aid of the relevance table as a termination criterion for a relevance check of a qualifier which is not in the qualifier group (IDG).

2. Generation process according to claim 1, **characterised in that** the assignment of the qualifiers (I89; I5, I1, I8, I16) of the qualifier group (IDG) to the places (P2, P3, P6, P7, P9, P10) of the relevance table (22; 22b, 22c, 22d) is rearranged, in order to reduce the maximum number (smax) of steps, wherein

    - the number of places (P0 - P10) which may be assigned to the qualifiers (I89; I5, I1, I8, I16) of the qualifier group (IDG) in the relevance table (22; 22b, 22c, 22d) is increased or reduced and/or

    - the qualifiers (I89; I5, I1, I8, I16) of the qualifier group (IDG) are transformed in the course of application of the computation rule (1) to a mapping quantity which may be used to assign places in the relevance table (22; 22b, 22c, 22d) to the relevant qualifiers (I89; I5, I1, I8, I16), and/or

    - assignments of qualifiers (I89; I5, I1, I8, I16) of the qualifier group (IDG) which conflict in assignment to a place are exchanged.

3. Generation process according to claim 1 or 2, **characterised in that** at least one qualifier (I89; I5, I1, I8, I16) of the qualifier group (IDG) is assigned a place (P0 - P10) in the relevance table (22; 22b, 22c, 22d) on an optimised basis, so that the number of steps required to locate the place (P0 - P10) is reduced, wherein for optimisation

    - the number of places (P0 - P10) assignable in the relevance table (22; 22b, 22c, 22d) to the qualifiers (I89; I5, I1, I8, I16) of the qualifier group (IDG) is increased or reduced and/or

- the qualifiers (I89; I5, I1, I8, I16) of the qualifier group (IDG) are transformed in the course of application of the computation rule (1) to a mapping quantity which may be used to assign places in the relevance table (22; 22b, 22c, 22d) to the relevant qualifiers (I89; I5, I1, I8, I16).

4. Generation process according to claim 2 or 3, **characterised in that** the mapping quantity is formed in such a way that the places assigned to the relevant qualifiers (I89; I5, I1, I8, I16) are arranged in the relevance table (22; 22b, 22c, 22d) evenly and so as to avoid conflicts and/or that to each qualifier (I89; I5, I1, I8, I16) of the qualifier group (IDG) a numerical value (z) determined in particular as a random number or from a series of numbers is added or subtracted and/or that each of the qualifiers (I89; I5, I1, I8, I16) is multiplied by a multiplier and/or that logical operations, in particular logical "AND", logical "OR" or "Shift" are applied.

5. Generation process according to one of claims 3 or 4, **characterised in that** assignments of qualifiers (I89; I5, I1, I8, I16) of the qualifier group (IDG) which conflict in assignment to a place are exchanged.

6. Generation process according to any of claims 3 to 5, **characterised in that** the one or more qualifiers (I89; I5, I1, I8, I16) to be placed in the relevance table (22; 22b, 22c, 22d) on an optimised basis is selected by a predetermined criterion, in particular by an anticipated transmission frequency or by a priority of the respective messages (19) which contains it.

7. Generation process according to any of the preceding claims, **characterised in that** in the application of the computation rule (1) and/or the stepping rule (2), an indicator to the respective first and/or the respective further place (P0; P0 - P10) is determined, by dividing a value (w) of the qualifiers (I89; I5, I1, I8, I16) or a stepping value (inc) formed from the latter with the aid of the stepping rule (2) by a prime number corresponding to the number of places provided for qualifiers (I89; I5, I1, I8, I16) in the relevance table (22; 22b, 22c, 22d), wherein the indicator is determined in particular as the whole-number remainder of a division of the value (w) of the qualifiers (I89; I5, I1, I8, I16) by the prime number.

8. Generation process according to any of the preceding claims, **characterised in that** the qualifier (I89; I5, I1, I8, I16) is contained in address data, in particular in a target address, of a particular message (19), and/or in a content qualifier for a content of the message (19) concerned.

9. Generation process according to any of the preceding claims, **characterised in that** a broadcast network is used as communication network (10) and/or that a bus system, in particular a CAN bus system or a LIN bus system, is used as communication network (10).

10. Generation process according to any of the preceding claims, **characterised in that** there is provided as non-use code a blank code and/or an invalid value not assigned to the qualifier group (IDG) containing qualifiers (I89; I5, I1, I8, I16).

11. Checking process for the relevance checking of a qualifier (I89; I5, I1, I8, I16), which may be transmitted in a message (19) to a communication device (11, 12, 13) via a communication network (10) wherein, for a received qualifier a first place (P1; P0 - P10) in a relevance table is determined in the course of a hash process by applying a computation rule (1) to the qualifiers (I89; I5, I1, I8, I16), and wherein the received qualifier (I89; I5, I1, I8, I16) is rated as relevant when the qualifier (I89; I5, I1, I8, I16) is entered in the first place (P0, P1; P0 - P10)

    - in the course of the hash process, in the event of a conflict in which another qualifier (I89; I5, I1, I8, I16) or a value (w) assigned to the latter is entered at the particular place (P0, P1; P0 - P10) determined, then by application of a stepping rule (2) to the received qualifier (I89; I5, I1, I8, I16) and an index to the respective, currently determined place, further places in the same relevance table are determined, starting from the place determined in each case, until a place in the relevance table (22; 22b, 22c, 22d) has been found at which the received qualifier (I89; I5, I1, I8, I16) or a value (w) assigned to the latter is entered
    - that the application of the computation rule and the stepping rule in each case count as one step, and the checking of the received qualifier is terminated after a maximum number (smax) of steps,
    - that the received qualifier is rated as relevant when the qualifier (I89; I5, I1, I8, I16) or a value (w) assigned to the latter is entered in the currently determined first or further place (P0, P1; P0 - P10), and
    - that the received qualifier is rated as irrelevant when the respective currently determined place is a free place provided with a non-use code or when, after the maximum number (smax) of steps, no place was found at which the received qualifier (I89; I5, I1, I8, I16) or a value (w) assigned to the latter is entered, wherein the maximum number (smax) is greater than 1 and has been assigned to the relevance table in the course of a generation process.

12. Checking process according to claim 11, **characterised in that** the maximum number (smax) of steps has been reduced by rearranging the assignment of the qualifiers (I89; I5, I1, I8, I16) of the qualifier group (IDG) to the places (P2, P3, P6, P7, P9, P10) of the relevance table (22; 22b, 22c, 22d), wherein

    - - the number of places (P0 - P10) which may be assigned to the qualifiers (I89; I5, I1, I8, I16) of the qualifier group (IDG) in the relevance table (22; 22b, 22c, 22d) have been increased of reduced and/or
    - the qualifiers (I89; I5, I1, I8, I16) of the qualifier group (IDG) have been transformed in the course of application of the computation rule (1) to a mapping quantity which may be used to assign places in the relevance table (22; 22b, 22c, 22d) to the relevant qualifiers (I89; I5, I1, I8, I16), and/or
    - assignments of qualifiers (I89; I5, I1, I8, I16) of the qualifier group (IDG) which conflict in assignment to a place have been exchanged.

13. Checking process according to claim 11 or 12 **characterised in that**, in determining the places (P0; P0 - P10) in the relevance table (22; 22b, 22c, 22d) for the qualifier (I89; I5, I1, I8, I16), a computation rule (1) is applied by means of which the qualifiers (I89; I5, I1, I8, I16) of the qualifier group (IDG) are transformed to a mapping quantity which may be used to assign places in the relevance table (22; 22b, 22c, 22d) to the relevant qualifiers (I89; I5, I1, I8, I16), wherein the mapping quantity is formed in such a way that the places assigned to the relevant qualifiers (I89; I5, I1, I8, I16) are arranged in the relevance table (22; 22b, 22c, 22d) evenly and so as to avoid conflicts and/or that to each qualifier (I89; I5, I1, I8, I16) of the qualifier group (IDG) a numerical value (z) determined in particular as a random number or from a series of numbers is added or subtracted and/or that each of the qualifiers (I89; I5, I1, I8, I16) is multiplied by a multiplier and/or that logical operations, in particular logical "AND", logical "OR" or "Shift" are applied.

14. Checking process according to any of claims 11 to 13, **characterised in that** in the application of the computation rule (1) and/or the stepping rule (2), an indicator to the respective first and/or the respective further place (P0; P0 - P10) is determined, by dividing a value (w) of the qualifiers (I89; I5, I1, I8, I16) or a stepping value (inc) formed from the latter with the aid of the stepping rule (2) by a prime number corresponding to the number of places provided for qualifiers (I89; I5, I1, I8, I16) in the relevance table (22; 22b, 22c, 22d), wherein the indicator is determined in particular as the whole-number remainder of a division of the value (w) of the qualifiers (I89; I5, I1, I8, I16) by the prime number.

15. Checking process according to any of claims 11 to 14, **characterised in that** the qualifier (I89; I5, I1, I8, I16) is contained in address data, in particular in a target address, of a particular message (19), and/or in a content qualifier for a content of the message (19) concerned.

16. Checking process according to any of claims 11 to 15, **characterised in that** a broadcast network is used as communication network (10) and/or that a bus system, in particular a CAN bus system or a LIN bus system, is used as communication network (10).

17. Checking process according to any of claims 11 to 16, **characterised in that** there is provided as non-use code a blank code and/or an invalid value not assigned to the qualifier group (IDG) containing qualifiers (I89; I5, I1, I8, I16).

18. Generation module to form a relevance table (22; 22b, 22c, 22d) for a communication device (11, 12, 13) for the relevance checking as part of a hash process of qualifiers (I89; I5, I1, I8, I16) of a qualifier group (IDG) which are provided for the identification of messages (19) relevant to the communication device (11, 12, 13) and able to be transmitted over a communication network (10), with marking means for the marking with a non-use code of free places provided in the relevance table (22; 22b, 22c, 22d) and not assigned to any qualifier (I89; I5, I1, I8, I16) of the qualifier group (IDG), and with placing means

   - to determine a first place (P1; P0 - P10) in the relevance table as part of a hash process, by applying a computation rule (1) to the qualifier (I89; I5, I1, I8, I16) and entering the qualifier (I89; I5, I1, I8, I16) or a value (w) assigned to it at the first place, if the first place is free, and
   - to execute the steps specified in the characterising part of claim 1 for each qualifier (I89; I5, I1, I8, I16) of the qualifier group (IDG).

19. Check module for the relevance checking of a qualifier (I89; I5, I1, I8, I16) which may be transmitted in a message (19) over a communication network (10) to a communication device (11, 12, 13), with checking means to execute the checking steps of the checking process according to claim 11 for a received qualifier as part of a hash process.

20. Communication device (11, 12, 13) with a generation module according to claim 18 and/or with a check module according to claim 19.

21. Motor vehicle and/or development tool with a communication device (11, 12, 13) according to claim 20 and/or a generation module according to claim 18 and/or with a check module according to claim 19.

22. Generation module according to claim 18 and/or check module according to claim 19, **characterised in that** they each contain program code which may be run by a control means (40) of a communication device (11, 12, 13) and/or of a development tool (17).

23. Storage means, in particular diskette, CD-ROM, digital versatile disc, hard disc or the like, with a generation module and/or check module according to claim 22 stored thereon.

**Revendications**

1. Procédé de génération pour former un tableau de pertinence (22 ; 22b, 22c, 22d) pour un dispositif de communication (11, 12, 13) afin de vérifier la pertinence d'identificateurs (I89 ; I5, I1, I8, I16) d'un groupe d'identificateurs (IDG) dans le cadre d'un procédé de hachage, les identificateurs (I89 ; I5, I1, I8, I16) étant prévus pour l'identification d'informations (19) significatives pour le dispositif de communication (11, 12, 13), transmissibles par un réseau de communication (10), les emplacements (P2, P3, P6, P7, P9, P10) non assignés, dans le tableau de pertinence (22 ; 22b, 22c, 22d), à un identificateur (I89 ; I5, I1, I8, I16) du groupe d'identificateurs (IDG), étant marqués avec une identification de non-utilisation lors du procédé de génération, et un emplacement libre étant déterminé pour chaque identificateur (I89 ; I5, I1, I8, I16) du groupe d'identificateurs (IDG), emplacement pourvu d'une identification de non-utilisation dans le tableau de pertinence, et l'identificateur (I89 ; I5, I1, I8, I16) ou une valeur (w) affectée à celui-ci étant enregistré dans l'emplacement libre (P0, P1 ; P0-P10) déterminé, et un premier emplacement (P1 ; P0-P10) étant déterminé dans le tableau de pertinence par application d'une règle de calcul (1) à l'identificateur (I89 ; I5, I1, I8, I16), dans le cadre d'un procédé de hachage, **caractérisé**

   - **en ce que** dans le cadre du procédé de hachage et en cas de collision pour laquelle l'emplacement déterminé dans chaque cas n'est pas libre, on applique une règle de progression (2) à l'identificateur (I89 ; I5 ; I1 ; I8 ; I16) respectif et un indice à l'emplacement respectif non libre courant déterminé, tant que d'autres emplacements sont déterminés dans le même tableau de pertinence à partir de l'emplacement respectif déterminé, jusqu'à ce qu'un emplacement libre soit trouvé dans le tableau de pertinence (22; 22b, 22c, 22d),

- **en ce qu'**on détermine pour chaque identificateur (I89 ; I5, I1, I8, I16) du groupe d'identificateurs (IDG), le nombre d'étapes de travail nécessaires pour son placement dans le tableau de pertinence (22 ; 22b, 22c, 22d), chaque application de la règle de calcul et de la règle de progression comptant comme étape de travail, et

- **en ce que** le plus grand nombre nécessaire d'étapes de travail pour placer un identificateur (I89 ; I5, I1, I8, I16) du groupe d'identificateurs (IDG), est traité comme nombre maximal (smax) d'étapes de travail pour le tableau de pertinence, le nombre maximal (smax) étant supérieur à 1, ce qui fait que le nombre maximal (smax) peut être utilisé, à l'aide du tableau de pertinence, comme un critère de fin anormale lors d'une vérification de pertinence d'un identificateur non contenu dans le groupe d'identificateurs (IDG).

2. Procédé de génération selon la revendication 1, **caractérisé en ce qu'**on modifie l'ordre de l'affectation des identificateurs (I89 ; I5, I8, I16) du groupe d'identificateurs (IDG) aux emplacements (P2, P3, P6, P7, P9, P10) du tableau de pertinence (22 ; 22b, 22c, 22d), afin de réduire le nombre maximal (smax) d'étapes de travail,

- le nombre d'emplacements (P0-P10) pouvant être affecté aux identificateurs (I89 ; I5, I1, I8, I16) du groupe d'identificateurs (IDG) dans le tableau de pertinence (22 ; 22b, 22c, 22d), étant augmenté ou réduit et/ou
- des identificateurs (I89 ; I5, I1, I8, I16) du groupe d'identificateurs (IDG) étant transformés dans le cadre de l'application de la régle de calcul (1) à un sous-ensemble de représentation, à l'aide duquel des emplacements peuvent être affectés aux identificateurs (I89 ; I5, I8, I16) respectifs dans le tableau de pertinence (22 ; 22b, 22c, 22d) et/ou
- des affectations d'identificateurs (I89 ; I5, I1, I8, I16) du groupe d'identificateurs (IDG), entrant en collision lors de l'affectation à un emplacement, étant échangées.

3. Procédé de génération selon la revendication 1 ou 2, **caractérisé en ce qu'**à un moins un identificateur (I89 ; I5, I1, I8, I16) du groupe d'identificateurs (IDG) est affecté de manière optimisée un emplacement (P0-P10) dans le tableau de pertinence (22 ; 22b, 22c, 22d), de manière que le nombre d'étapes de travail, nécessaire pour trouver l'emplacement (P0-P10), soit réduit, tandis que pour l'optimisation

- le nombre d'emplacements (P0-P10) pouvant être affecté aux identificateurs (I89 ; I5, I8, I16) du groupe d'identificateurs (IDG) dans le tableau de pertinence (22 ; 22b, 22c, 22d), étant augmenté ou réduit et/ou
- les identificateurs (I89 ; I5, I8, I16) du groupe d'identificateurs (IDG) étant transformés dans le cadre de l'application de la règle de calcul (1) à un sous-ensemble de représentation, à l'aide duquel des emplacements peuvent être affectés aux identificateurs (I89 ; I5, I8, I16) respectifs dans le tableau de pertinence (22 ; 22b, 22c, 22d).

4. Procédé de génération selon la revendication 2 ou 3, **caractérisé en ce que** le sous-ensemble de représentation est formé de manière que les emplacements affectés aux identificateurs (I89 ; I5, I8, I16) respectifs, soient disposés de manière régulière et de façon à éviter des cas de collision dans le tableau de pertinence (22 ; 22b, 22c, 22d), et/ou **en ce qu'**à chaque identificateur (I89 ; I5, I8, I16) du groupe d'identificateurs (IDG) est additionnée ou soustraite une valeur chiffrée (z) déterminée en particulier comme nombre aléatoire ou dans une série de nombres, et/ou **en ce que** les identificateurs (I89 ; I5, I8, I16) sont multipliés chacun par un multiplicateur et/ou **en ce que** des opérations logiques, en particulier de logique "ET", de logique "OU" ou "décalage" sont appliquées.

5. Procédé de génération selon l'une des revendications 3 ou 4, **caractérisé en ce que** des affectations d'identificateurs (I89 ; I5, I8, I16) du groupe d'identificateurs (IDG), entrant en collision entre eux lors de l'affectation à un emplacement, sont échangées.

6. Procédé de génération selon l'une des revendications 3 à 5, **caractérisé en ce que** le au moins un identificateur (I89 ; I5, I8, I16), à placer de façon optimisée dans le tableau de pertinence (22 ; 22b, 22c, 22d), est choisi selon un critère prédéterminé, en particulier selon une fréquence de transmission probable ou selon une priorité de l'information (19) respective qui le contient.

7. Procédé de génération selon l'une des revendications précédentes, **caractérisé en ce que** lors de l'application de la règle de calcul (1) et/ou de la règle de progression (2), un indicateur est déterminé au premier et/ou à l'autre emplacement (P0 ; P0-P10) respectif, **en ce qu'**une valeur (w) des identificateurs (I89 ; I5, I8, I16) ou une valeur de progression (inc) formée à partir de celle-ci à l'aide de la règle de progression (2), est divisée par un nombre premier qui correspond au nombre d'emplacements prévus dans le tableau de pertinence (22 ; 22b, 22c, 22d) pour des identificateurs (I89 ; I5, I8, I16), l'indicateur étant déterminé en particulier comme le reste entier d'une division de la valeur (w) des identificateurs (I89 ; I5, I8, I16) par le nombre premier.

8. Procédé de génération selon l'une des revendications précédentes, **caractérisé en ce que** l'identificateur (I89 ; I5, I8, I16) est contenu dans une indication d'adresse, en particulier dans une adresse de destination d'une information (19) respective et/ou dans un identificateur de contenu pour un contenu de l'information (19) respective.

9. Procédé de génération selon l'une des revendications précédentes, **caractérisé en ce qu'**on utilise comme réseau de communication (10) un réseau de diffusion et/ou **en ce qu'**on utilise comme réseau de communication (10) un système de bus, en particulier un système de bus CAN ou un système de bus LIN.

10. Procédé de génération selon l'une des revendications précédentes, **caractérisé en ce qu'**il est prévu comme identification de non-utilisation une identification vide et/ou une valeur affectée à un identificateur (I89 ; I5, I8, I16) non valable, contenu dans le groupe d'identificateurs IDG.

11. Procédé de vérification pour la vérification de pertinence d'un identificateur (I89 ; I5, I8, I16) qui peut être transmis à un dispositif de communication (11, 12, 13), par un réseau de communication (10), dans une information (19), un premier emplacement (P1 ; P0-P10) dans un tableau de pertinence étant déterminé, par application d'une règle de calcul (1) à l'identificateur (I89 ; I5, I8, I16), pour un identificateur reçu dans le cadre d'un procédé de hachage, et l'identificateur (I89 ; I5, I8, I16) reçu étant classé comme significatif si au premier emplacement (P0, P1 ; P0-P10) l'identificateur (I89 ; I5, I8, I16) est enregistré, **caractérisé en ce que** dans le cadre du procédé de hachage, en cas de collision pour laquelle à l'emplacement (P0, P1 ; P0-P10) déterminé respectif est enregistré un autre identificateur (I89 ; I5, I8, I16) ou une valeur (w) affectée à celui-ci, on détermine, par application d'une règle de progression (2) à l'identificateur (I89 ; I5, I8, I16) reçu et un indice à l'emplacement déterminé courant, d'autres emplacements dans le même tableau de pertinence, à partir de l'emplacement déterminé respectif, jusqu'à ce qu'un emplacement soit trouvé dans le tableau de pertinence (22 ; 22b, 22c, 22d) auquel l'identificateur (I89 ; I5, I8, I16) reçu ou une valeur (w) affectée à celui-ci est enregistré,

- **en ce que** l'application de la règle de calcul et de la règle de progression est comptée dans chaque cas comme une étape de travail et la vérification de l'identificateur reçu est interrompue après un nombre maximal (smax) d'étapes de travail,

- **en ce que** l'identificateur reçu est classé comme significatif si au premier emplacement courant déterminé ou à un autre emplacement (P0, P1 ; P0-P10) est enregistré l'identificateur (I89 ; I5, I8, I16) ou une valeur (w) affectée à celui-ci, et

- **en ce que** l'identificateur reçu est classé comme non significatif si l'emplacement courant déterminé dans chaque cas est un emplacement libre, pourvu d'une identification de non-utilisation, ou si après le nombre maximal (smax) d'étapes de travail aucun emplacement n'a été trouvé auquel l'identificateur (I89 ; I5, I8, I16) reçu ou une valeur (w) affectée à celui-ci est enregistré, le nombre maximal (smax) étant supérieur à 1 et ayant été affecté au tableau de pertinence dans le cadre d'un procédé de génération.

12. Procédé de vérification selon la revendication 11, **caractérisé en ce que** le nombre maximal (smax) d'étapes de travail a été réduit par modification de l'ordre de l'affectation des identificateurs (I89 ; I5, I8, I16) du groupe d'identificateurs (IDG) aux emplacements (P2, P3, P6, P7, P9, P10) du tableau de pertinence (22 ; 22b, 22c, 22d),

- le nombre d'emplacements (P0-P10) pouvant être affectés aux identificateurs (I89 ; I5, I8, I16) du groupe d'identificateurs (IDG) dans le tableau de pertinence (22 ; 22b, 22c, 22d), ayant été augmenté ou réduit et/ou

- les identificateurs (I89 ; I5, I8, I16) du groupe d'identificateurs (IDG) ayant été transformés dans le cadre de l'application de la règle de calcul (1) à un sous-ensemble de représentation, à l'aide duquel des emplacements peuvent être affectés aux identificateurs (I89 ; I5, I8, I16) respectifs dans le tableau de pertinence (22 ; 22b, 22c, 22d) et/ou

- des affectations d'identificateurs (I89 ; I5, I8, I16), entrant en collision entre eux lors de l'affectation à un emplacement, du groupe d'identificateurs (IDG), ayant été échangées.

13. Procédé de vérification selon la revendication 11 ou 12, **caractérisé en ce que** lors de la détermination des emplacements (P0 ; P0-P10) dans le tableau de pertinence (22 ; 22b, 22c, 22d) pour les identificateurs (I89 ; I5, I8, I16), on applique une règle de calcul (1) par laquelle les identificateurs (I89 ; I5, I8, I16) du groupe d'identificateurs (IDG) sont transformés sur un sous-ensemble de représentation à l'aide duquel on peut affecter aux identificateurs (I89 ; I5, I8, I16) respectifs des emplacements dans le tableau de pertinence (22 ; 22b, 22c, 22d), le sous-ensemble de représentation étant formé en particulier de manière que les emplacements affectés aux identificateurs (I89 ; I5, I8, I16) respectifs, soient disposés de manière régulière et de façon à éviter des cas de collision dans le tableau de pertinence (22 ; 22b, 22c, 22d), et/ou pour laquelle à chaque identificateur (I89 ; I5, I8, I16) du groupe d'identificateurs (IDG) est additionnée ou soustraite de celui-ci une valeur chiffrée (z) déterminée en particulier comme nombre aléatoire ou à partir d'une série de nombres, et/ou pour laquelle les identificateurs (I89 ; I5, I8, I16) sont multipliés chacun par un multiplicateur et/ou pour laquelle des opérations logiques, en particulier de logique "ET", de logique "OU" ou "décalage" sont appliquées.

14. Procédé de vérification selon l'une des revendications 11 à 13, **caractérisé en ce que** lors de l'application de la règle de calcul (1) et/ou de la règle de progression (2), on détermine un indicateur au premier emplacement et/ou à l'autre emplacement (P0 ; P0-P10) respectif, en divisant une valeur (w) des identificateurs (I89 ; I5, I8, I16) ou une valeur de progression (inc) formée à partir de celle-ci à l'aide de la règle de progression (2), par un nombre premier qui correspond au nombre d'emplacements prévus dans le tableau de pertinence (22 ; 22b, 22c, 22d) pour des identificateurs (I89 ; I5, I8, I16), l'indicateur étant déterminé en particulier comme le reste entier d'une division de la valeur (w) des identificateurs (I89 ; I5, I8, I16) par le nombre premier.

15. Procédé de vérification selon l'une des revendications 11 à 14, **caractérisé en ce que** l'identificateur (I89 ; I5, I8, I16) est contenu dans une indication d'adresse, en particulier dans une adresse de destination d'une information (19) respective et/ou dans un identificateur de contenu pour un contenu de l'information (19) respective.

16. Procédé de vérification selon l'une des revendications 11 à 15, **caractérisé en ce qu'**on utilise comme réseau de communication (10) un réseau de diffusion et/ou **en ce qu'**on utilise comme réseau de communication (10) un système de bus, en particulier un système de bus CAN ou un système de bus LIN.

17. Procédé de vérification selon l'une des revendications 11 à 16, **caractérisé en ce qu'**il est prévu comme identification de non-utilisation une identification vide et/ou une valeur affectée à un identificateur (I89 ; I5, I8, I16) non valable, contenu dans le groupe d'identificateurs IDG.

18. Module de génération pour former un tableau de pertinence (22 ; 22b, 22c, 22d) pour un dispositif de communication (11, 12, 13) pour la vérification de pertinence d'identificateurs (I89 ; I5, I8, I16) d'un groupe d'identificateurs (IDG) dans le cadre d'un procédé de hachage, qui sont prévus pour identifier des informations (19) significatives pour le dispositif de communication (11, 12, 13) et pouvant être transmises par un réseau de communication (10), avec des moyens de marquage pour marquer des emplacements libres, prévus dans le tableau de pertinence (22 ; 22b, 22c, 22d), non affectés à un identificateur (I89 ; I5, I8, I16) du groupe d'identificateurs (IDG), avec une identification de non-utilisation et avec des moyens de placement

- pour déterminer un premier emplacement (P1 ; P0-P10) dans le tableau de pertinence dans le cadre d'un procédé de hachage par application d'une règle de calcul (1) à l'identificateur (I89 ; I5, I8, I16) et enregistrement de l'identificateur (I89 ; I5, I8, I16) ou d'une valeur (w) affectée à celui-ci, au premier emplacement, si le premier emplacement est libre, et
- pour exécuter les étapes indiquées dans la partie caractérisante de la revendication 1 pour chaque identificateur (I89 ; I5, I8, I16) du groupe d'identificateurs (IDG).

19. Module de vérification pour la vérification de pertinence d'un identificateur (I89 ; I5, I8, I16) qui peut être transmis à un dispositif de communication (11, 12, 13) par un réseau de communication (10) dans une information (19), avec des moyens de vérification pour exécuter les étapes de vérification du procédé de vérification selon la revendication 11 pour un identificateur reçu dans le cadre d'un procédé de hachage.

20. Dispositif de communication (11, 12, 13) avec un module de génération selon la revendication 18, et/ou avec un module de vérification selon la revendication 19.

21. Véhicule automobile et/ou outil de développement comportant un dispositif de communication (11, 12, 13) selon la revendication 20 et/ou un module de génération selon la revendication 18 et/ou comportant un module de vérification selon la revendication 19.

22. Module de génération selon la revendication 18 et/ou module de vérification selon la revendication 19, **caractérisé en ce qu'**ils contiennent chacun des codes de programmation qui peuvent être exécutés par un moyen de commande (40) d'un dispositif de communication (11, 12, 13) et/ou d'un outil de développement (17).

23. Moyen de mémorisation, en particulier disquette, CD-ROM, DVD, unité à disque dur ou similaire, avec un module de génération et/ou module de vérification selon la revendication 22 mémorisé sur celui-ci.

**Fig. 1**

**Fig. 2**

**Fig. 3**

**Fig. 4**

| IDG | w | p | inc | P0 | P1 | P2 | P3 | P4 | P5 | P6 | P7 | P8 | P9 | P10 | ST |
|-----|---|---|-----|----|----|----|----|----|----|----|----|----|----|-----|----|
| I5 | 5 | 5 | 6 | | | | | | 5 | | | | | | 1 |
| I1 | 1 | 1 | 2 | | 1 | | | | 5 | | | | | | 1 |
| I8 | 8 | 8 | 9 | | 1 | | | | 5 | | | 8 | | | 1 |
| I89 | 89 | 1 | 10 | 89 | 1 | | | | 5 | | | 8 | | | 2 |
| I16 | 16 | 5 | 7 | 89 | 1 | | | 16 | 5 | | | 8 | | | 4 |

**Fig. 5**

22

| IDG | w | p | inc | P0 | P1 | P2 | P3 | P4 | P5 | P6 | P7 | P8 | P9 | P10 | ST |
|-----|---|---|-----|----|----|----|----|----|----|----|----|----|----|-----|----|
| I5 | 5 | 5 | 6 | | | | | | 5 | | | | | | 3 |
| I1 | 1 | 1 | 2 | | 1 | | | | 5 | | | | | | 1 |
| I8 | 8 | 8 | 9 | | 1 | | | | 5 | | | 8 | | | 1 |
| I89 | 89 | 1 | 10 | 89 | 1 | | | | 5 | | | 8 | | | 2 |
| I16 | 16 | 5 | 7 | 89 | 1 | | | 16 | 5 | | | 8 | | | 1 |

**Fig. 6**

22b

| IDG | wt | p | inc | P0 | P1 | P2 | P3 | P4 | P5 | P6 | P7 | P8 | P9 | P10 | ST |
|-----|----|---|-----|----|----|----|----|----|----|----|----|----|----|-----|----|
| I5 | 9 | 9 | 10 | | | | | | | | | | 5 | | 1 |
| I1 | 5 | 5 | 6 | | | | | | 1 | | | | 5 | | 1 |
| I8 | 12 | 1 | 3 | | 8 | | | | 1 | | | | 5 | | 1 |
| I89 | 93 | 5 | 4 | | 8 | 89 | | | 1 | | | | 5 | | 3 |
| I16 | 20 | 9 | 1 | | 8 | 89 | | | 16 | | | | 5 | 16 | 2 |

**Fig. 7**

22c

| IDG | wt | p | inc | P0 | P1 | P2 | P3 | P4 | P5 | P6 | P7 | P8 | P9 | P10 | ST |
|-----|----|---|-----|----|----|----|----|----|----|----|----|----|----|-----|----|
| I5 | 9 | 9 | 10 | | | | | | | | | | 5 | | 1 |
| I1 | 5 | 5 | 6 | | | | | | 1 | | | | 5 | | 2 |
| I8 | 12 | 1 | 3 | | 8 | | | | 1 | | | | 5 | | 1 |
| I89 | 93 | 5 | 4 | 1 | 8 | | | | 89 | | | | 5 | | 1 |
| I16 | 20 | 9 | 1 | 1 | 8 | | | | 89 | | | | 5 | 16 | 2 |

**Fig. 8**

22d